# EUROPEAN PATENT SPECIFICATION

(11) **EP 3 552 809 B1**
(45) Date of publication and mention of the grant of the patent: **08.06.2022**
(21) Application number: 19163633.1
(22) Date of filing: 19.03.2019
(51) Int. Cl.: B29C 70/38

(54) **AUTOMATED FIBER PLACEMENT END EFFECTOR WITH LAMINAR GAS COOLING JET AND INFRARED IMAGE PROCESSOR FOR IN-SITU INSPECTION**
AUTOMATISCHER FASERPLATZIERUNGSENDEFFEKTOR MIT LAMINARGASKÜHLSTRAHL UND INFRAROTBILDPROZESSOR ZUR IN-SITU-INSPEKTION
EFFECTEUR D'EXTRÉMITÉ DE PLACEMENT DE FIBRE AUTOMATISÉ COMPORTANT UN JET DE REFROIDISSEMENT DE GAZ LAMINAIRE ET PROCESSEUR D'IMAGE INFRAROUGE POUR INSPECTION IN SITU

(30) Priority: 30.03.2018 US 201815941160; 04.05.2018 NL 2020882
(43) Date of publication of application: 16.10.2019
(73) Proprietor: The Boeing Company, Chicago, IL 60606-1596 (US)
(72) Inventor: WEBB, Sean Christian, Chicago, IL 606061596 (US)
(74) Representative: Duxbury, Stephen

(56) References cited:
- WO-A1-2016/088024
- KRANKENHAGEN ET AL.: "Thermographic rotor blade inspection from larger distances, a promising tool for the maintenance of windturbines", 19TH WORLD CONFERENCE ON NON-DESTRUCTIVE TESTING 2016, 1 January 2016 (2016-01-01), pages 1-8, XP002793697,
- R.F. Janssen: "The influence of laminar-turbulent transition on the performance of a propeller", Master of Science Thesis, Faculty of Aerospace Engineering, 24 April 2015 (2015-04-24), XP002787803, Delft University of Technology Retrieved from the Internet: URL:https://www.google.com/url?sa=t&rct=j& q=&esrc=s&source=web&cd=1&cad=rja&uact=8&v ed=2ahUKEwjK9KTrqOPfAhVEqaQKHehXBCoQFjAAeg QICRAB&url=https%3A%2F%2Frepository.tudelf t.nl%2Fislandora%2Fobject%2Fuuid%253Aee2db 063-a1c0-4f0c-b8a6-79f6f3acb749&usg=AOvVaw 1DqW9TayrLNXjKvpNjNbGH [retrieved on 2019-01-09]

## Description

### BACKGROUND INFORMATION

### Field

The present disclosure relates generally to fabrication of layered composite materials, and more specifically, to methods and systems for automated fiber placement ply wrinkle and foreign object debris inspection.

### Background

Composite structures such as those used for aerospace applications may be fabricated using automated fiber placement (AFP) machines that lay down relatively narrow strips of preimpregnated tows or slit composite tape onto a manufacturing tool, such as a mandrel. AFP machines can include multiple groups, or tows arranged adjacent as a conformal band onto the tool. The tows are fed by spools of tape prepreg composite carried on the end effector and supplied to a plurality of compaction rollers that apply and compress the tow band onto the tool or mandrel.

Current techniques require waiting for other non-destructive inspection techniques that require the full fuselage barrel to complete fabrication and cure. Detecting an inconsistency after full fabrication can be very costly due to rework and waste. Therefore, techniques for preventing or identifying wrinkles during layup would be desirable.

Additionally, in some cases, quality inspectors are required to inspect one hundred percent of the ply placements using optical laser templates (OLT) to check ply boundaries and orientations. This method is currently the most efficient method for inspection, but this method involves a complicated process that is labor intensive and time consuming. On average, thirty or more hours is required for inspection of a full fuselage. Thus, again, techniques for preventing or identifying wrinkles during layup would be desirable.

WO 2016/088024 A1 refers to an online inspection method and system having an illumination system that provides bright-field and dark-field illumination concurrently or sequentially, at varying intensities, in order to acquire images that may be read by an image processing device. The image processing device may obtain measurements of features in the images and evaluate acceptability of the features.

The following paper is also known: KRANKENHAGEN ET AL., "Thermographic rotor blade inspection from larger distances, a promising tool for the maintenance of windturbines", 19TH WORLD CONFERENCE ON NON-DESTRUCTIVE TESTING 2016, (20160101), pages 1 - 8.

### SUMMARY

The illustrative embodiments provide for an inspection device. The inspection device includes a gas dispenser aimed at a workpiece; and a camera aimed at a gas impingement point on the workpiece.

The illustrative embodiments also provide for fabricating a portion of an aircraft using the above inspection device.

The illustrative embodiments also provide for an automatic fiber placement end effector, including: a gas nozzle connected to an end effector; and an infrared camera directed at an impingement point where a gas from the gas nozzle impinges on a surface of a workpiece. The gas nozzle and the infrared camera pointed such that both the gas is directable at a workpiece and infrared data can be taken from the workpiece.

The illustrative embodiments also provide for fabricating a portion of an aircraft using the above automatic fiber placement and end effector.

The illustrative embodiments also provide for a method of inspecting a structure. The method includes placing a tow on a tool and directing a gas flow onto the tow. The method also includes contrasting a first image derived from the gas flow on the tow with a second image derived from the tow. The first image and the second image set come from a location where the gas flow impinges on the tow.

The illustrative embodiments also provide for a portion of an aircraft assembled according to the above method.

The illustrative embodiments also provide for a method of fabricating a composite structure. The method includes applying a composite material to a surface of a workpiece. The method also includes dispensing a gas to impinge on the composite material using a nozzle. The method also includes monitoring, using a camera, gas flow patterns over the composite material that arise as a result of dispensing the gas.

The illustrative embodiments also provide for a portion of an aircraft assembled according to the above method.

The illustrative embodiments also provide for a method of fabricating a part having a coating applied to a surface of the part. The method includes applying a coating to a surface of the part. The method also includes after applying, dispensing a gas to impinge on the coating using a nozzle. The method also includes monitoring, using a camera, gas flow patterns over the coating that arise as a result of dispensing the gas.

The illustrative embodiments also provide for a portion of an aircraft assembled according to the above method.

The illustrative embodiments also provide for a method of inspecting a surface with the above referred to inspection device. The method includes directing a gas flow onto the surface. The method also includes monitoring for a spatial stagnation point in the gas flow. The method also includes correlating a detected gas flow spatial stagnation point with a presence of an inconsistency on the surface.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** illustrates an aircraft that can be fabricated using the techniques described herein, in accordance with an illustrative embodiment;
**Figure 2** illustrates an isometric, perspective view of a commercial passenger aircraft with composite fuselage that is fabricated using the automated fiber placement techniques described herein, in accordance with an illustrative embodiment;
**Figure 3** illustrates a flowchart of a process for laying tape on a surface, in accordance with an illustrative embodiment;
**Figure 4** illustrates an apparatus for disposing an elongate tape during formation of a composite member, in accordance with an illustrative embodiment;
**Figure 5** illustrates is an isometric representation of an automatic fiber placement end effector with laminar gas cooling jet and IR image detector, in accordance with an illustrative embodiment;
**Figure 6** illustrates a magnified view of the cooling jet shown in **Figure 5****,** in accordance with an illustrative embodiment;
**Figure 7** illustrates a side view representation of the automatic fiber placement end effector shown in **Figure 6****,** in accordance with an illustrative embodiment;
**Figure 8** illustrates a front view representation of the automatic fiber placement end effector shown in **Figure 6****,** in accordance with an illustrative embodiment;
**Figure 9** illustrates a rear overhead view representation of the automatic fiber placement end effector shown in **Figure 5****,** in accordance with an illustrative embodiment;
**Figure 10** illustrates the automated fiber placement end effector of **Figure 5** in use, together with flow and stagnation characteristics of a jet impinging on a flat surface, in accordance with an illustrative embodiment;
**Figure 11A** illustrates a flat plate with multiple jet orifices, in accordance with an illustrative embodiment;
**Figure 11B** illustrates a top view of a two-dimensional contour plot indicating gas flow stagnation points projected onto a flat plate, which are concentric to the locations of the jet orifices, in accordance with an illustrative embodiment;
**Figure 12** illustrates a series of graphs showing flow behavior of gas jet impinging on a variety of curved surfaces, in accordance with an illustrative embodiment;
**Figure 13** illustrates effects of a gas jet impinging on complex cylinders, in accordance with an illustrative embodiment;
**Figure 14A** illustrates a pristine flat layup surface without inconsistencies, as detected according to the illustrative embodiments, in accordance with an illustrative embodiment;
**Figure 14B** illustrates an example of an inconsistency, as detected according to the illustrative embodiments, in accordance with an illustrative embodiment;
**Figure 14C** illustrates and example of a pressure distribution on the impingement surface of an underexpanded jet impinging on a flat surface at an inclined angle, in accordance with an illustrative embodiment;
**Figure 15** is an illustration of an inspection device, in accordance with an illustrative embodiment;
**Figure 16** illustrates an automatic fiber placement end effector, in accordance with an illustrative embodiment;
**Figure 17** is an illustration of a flowchart of a method of inspecting a structure, in accordance with an illustrative embodiment.
**Figure 18** is an illustration of a flowchart of a method of fabricating a composite structure, in accordance with an illustrative embodiment;
**Figure 19** is an illustration of a flowchart of a method of fabricating a part having a coating applied to a surface of the part, in accordance with an illustrative embodiment;
**Figure 20** is an illustration of a flowchart of a method of inspecting a surface, in accordance with an illustrative embodiment;
**Figure 21** is an illustration of an aircraft manufacturing and service method, in accordance with an illustrative embodiment; and
**Figure 22** is an illustration of an aircraft, in accordance with an illustrative embodiment.

### DETAILED DESCRIPTION

The illustrative embodiments provide for a novel automated fiber placement (AFP) end effector with cool laminar gas cooling jet and infrared image processor for in-situ, ply-by-ply wrinkle, and foreign object debris (FOD) detection in tapes and tow prepreg composite structures.

As used herein the term "cool" refers to temperatures below room temperature, though the temperature of the gas flow may be 17.78 °C (0°F) or less in some illustrative embodiments.

The illustrative embodiments also provide for a novel, thermo-fluid dynamic technique. Thus, the illustrative embodiments can be categorized within the realm of non-destructive inspection and process control techniques for automated fiber placement machines and the composite structure that is fabricated thereof. It is desirable to develop composite structures, manufacturing, and inspection methods that simplify and improve process flow thereby reducing cost, rework, and waste. The illustrative embodiments also provide a solution for instantaneous detection of inconsistencies in tape-wound composite prepreg structures. Stated differently, the illustrative embodiments provide for real time, in-situ inspection.

Thus, the methods and devices of the illustrative embodiments solve several technological challenges. For example, the illustrative embodiments may reduce the need for full ply inspection procedures by inspecting composite material as it is laid. The methods and devices of the illustrative embodiments also reduce the cost of inspection and manufacturing of composite objects. In a more specific example, the illustrative embodiments allow tape laying to proceed layer-by-layer without stopping after each layer to inspect a single layer. Rather, assuming tape laying proceeds within tolerance, the illustrative embodiments allow continuous, uninterrupted laying of plies until completion of the composite object. Yet further, the illustrative embodiments allow inspection data to be stored as inspection occurs in real time during tape laying. In this manner, the illustrative embodiments create an inspection record as composite material is laid down. Accordingly, questions raised during a later inspection can be answered by reference to the build record for the product. Still further, the illustrative embodiments distinguish in that inspection covers inspecting a whole tape width, and cumulatively, a whole ply, rather than narrow bands or points within a ply. From the above, the illustrative embodiments reduce or eliminate the need for manual inspection and/or work stopping inspections, thereby saving both the time of manufacture and the cost of manufacture.

These technical advantages provided by the illustrative embodiments are best understood in the context of composite manufacturing, though the illustrative embodiments may be applied to other types of manufacturing including applications of coatings as well as additive manufacturing techniques and subtractive manufacturing techniques. Nevertheless, for composite manufacturing, composite structures, such as those used for aerospace applications, may be fabricated using automated fiber placement (AFP) machines that lay down relatively narrow strips of preimpregnated tows or slit composite tape onto a manufacturing tool, such as a mandrel. AFP machines can include multiple groups, or tows arranged adjacent as a conformal band onto the tool. The tows are fed by spools of tape prepreg composite carried on the end effector and supplied to a plurality of compaction rollers that apply and compress the tow band onto the tool or mandrel.

For many AFP applications, it is desirable to inspect the structure in real time to make sure out of tolerance situations are detected early. Thus, the illustrative embodiments provide for in-process detection of inconsistencies (ply wrinkles, FOD, etc).

In some cases, quality inspectors are required to inspect one hundred percent of the ply placements using optical laser templates (OLT) to check ply boundaries and orientations. This method is currently the most efficient method for inspection, but involves a complicated process that is labor intensive and time consuming. On average, thirty or more hours is needed to inspect a full fuselage. The OLT process is described as follows: The OLT unit is indexed to a cure mandrel and the appropriate ply is projected onto the surface of the composite structure currently being fabricated. An inspector then visually compares the projected template boundary to the edge of the recently placed composite ply. In general, this process is throughput limiting. For a high rate manufacturing environment, this process can be found unacceptable to meet business requirements. Some such inspection methods are known; however, existing techniques are inefficient or do not provide the same unique features of the illustrative embodiments.

For example, inspection of uncured fiber-reinforced composite components can be performed by non-contact 3D measurements of the component using 3D digital image correlation with patterned illumination. This method can be used in conjunction with an AFP machine for inconsistency detection. However, the method includes projecting a light pattern on the structure and comparing a test profile to a baseline profile. In contrast, the illustrative embodiments use infrared imagery for pattern recognition of gas flow, not visible light illumination, as the acting stimulus.

In another example, a robotic end effector may include a vacuum gripping mechanism and recording device with camera that detects, grips, and applies each ply to a tool. In this example, the end effector includes a feedback control loop with force sensor for detecting compaction force. The end effector could include a scanner that performs a pre- and post-inspection of the plies. However, in this technique, infrared imagery is not used, and visible light systems cannot detect some types of inconsistencies.

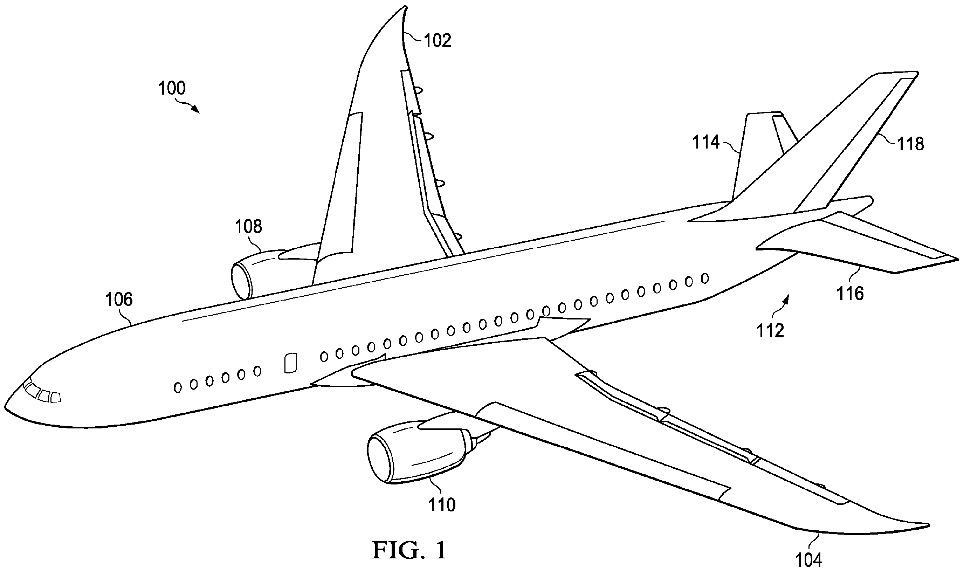

With reference now to the figures, and in particular, with reference to **Figure 1****,** an illustration of an aircraft is depicted in accordance with an illustrative embodiment. Aircraft **100** is an example of an aircraft which may be constructed and inspected using the techniques described herein.

In this illustrative example, aircraft **100** has wing **102** and wing **104** attached to body **106.** Aircraft **100** includes engine **108** attached to wing **102** and engine **110** attached to wing **104.** Aircraft **100** could be any other aircraft, such as a prop aircraft, a helicopter, or some other moveable platform such as an automobile, boat, or even a building constructed from composite materials.

Aircraft **100** may have other features. For example, body **106** has tail section **112.** Horizontal stabilizer **114,** horizontal stabilizer **116,** and vertical stabilizer **118** are attached to tail section **112** of body **106.**

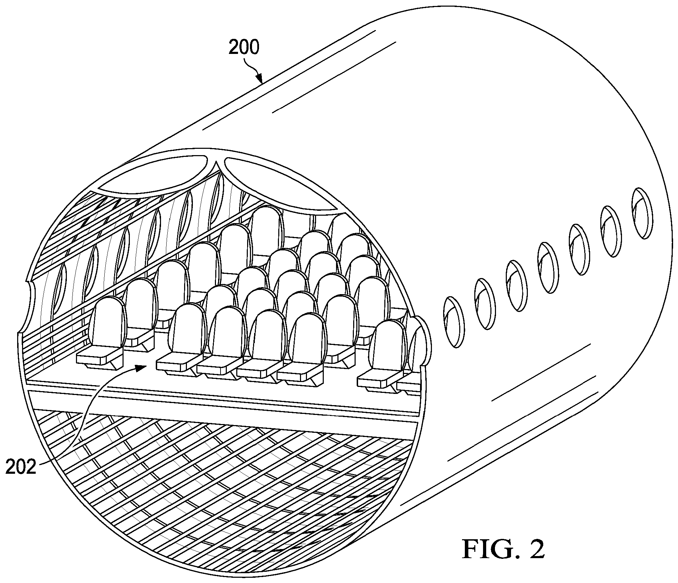

**Figure 2** illustrates an isometric, perspective view of a commercial passenger aircraft with composite fuselage that is fabricated using the automated fiber placement techniques described herein, in accordance with an illustrative embodiment. Fuselage **200** may be body **106** of **Figure 1****.**

In **Figure 2****,** fuselage **200** has been cut away to show seats **202.** While substantially reduced in scale, the relative scale of the size of seats **202** to fuselage **200** is roughly accurate. Thus, the scale of the composite layup and inspection problem becomes apparent. The illustrative embodiments address this problem with the cool gas jet automatic fiber placement end effector and associated techniques described herein.

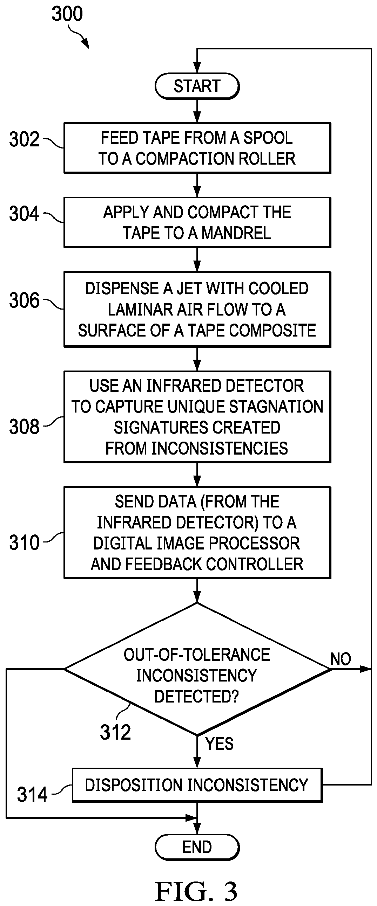

**Figure 3** illustrates a flowchart of a process for laying tape on a surface, in accordance with an illustrative embodiment. Method **300** may also be characterized as a method of composite structure formation combined with inconsistency detection using an end effector having a cooling jet and an infrared camera.

Method **300** begins by feeding tape from a spool to a compaction roller (operation **302**). Next, method **300** includes applying and compacting the tape to a mandrel (operation **304**). Method **300** then includes dispensing a jet with cooled laminar gas flow to a surface of a tape composite (operation **306**). In one illustrative embodiment, gas may be dispensed tangent to the surface, normal to the surface, or at some angle with respect to the surface, depending on the particular implementation.

Next, method **300** includes using an infrared detector to capture unique stagnation signatures created from inconsistencies (operation **308**). Method **300** then includes sending data (from the infrared detector) to a digital image processor and feedback controller (operation **310**).

A determination is then made whether an out-of-tolerance inconsistency is detected (operation **312**). If not, then the process continues by returning to operation **302.** However, in some cases when the workpiece is complete, method **300** may terminate thereafter. If an out-of-tolerance inconsistency is detected, then the inconsistency is dispositioned (operation **314**). Inconsistencies within tolerance are typically acceptable without further consideration. Inconsistencies out of tolerance would need to be dispositioned as acceptable after some type of analysis, or dispositioned as not acceptable and in need of rework or scrap after some type of analysis. Dispositioning the inconsistency may include reworking the inconsistency, discarding the workpiece and starting its manufacture over again, noting the inconsistency, or simply ignoring the inconsistency if some other factor indicates that labeling of the inconsistency as being out-of-tolerance should be overruled. If the workpiece is not complete, then the process may return to operation **302** and repeat; otherwise, method **300** may terminate thereafter.

Stated differently, the end effector components are positioned such that the tape roller is at the leading edge, then the gas jet is positioned just aft of the roller, and the infrared camera is positioned just aft or at the centerline of the gas jet and can be in-plane of the gas jet or orthogonal to the gas flow stream. From this sequential positioning, the invention is part of a ternary (i.e., three-part) process that occurs continuously and simultaneously during the fabrication process as the tool is rotated and the automatic fiber placement arm translates. Again, gas may be dispensed tangent to the surface, normal to the surface, or at some angle with respect to the surface, depending on the particular implementation.

Similar to the above description for method **300,** this process can be described as follows: First tape, in the form of tows, is applied to existing fuselage tool. Second, the gas jet disperses cooled laminar gas across the rolled tape at pre-cure temperatures which acts as a sensing stimulus for the inspection technique, and also prevents initializing cure of the prepreg material. Third, the infrared camera and feedback controller detects inconsistencies in the topographical and spatial stagnation points of the cool gas as it flows across the tape surface. Fourth, the gas flow is differentiated by the detector due to the contrast in temperature the flow provides compared to the ambient temperature of the existing tape and mandrel tool. The sensing mechanism operates immediately as the flow is dispersed. The sensing mechanism is designed to work in this manner as excessive and continuous dispersal of the cool gas on the same surface will eventually cool the surface inconsistency to a similar cooled temperature, and reduce the contrast resolution of the infrared data. Fifth, corrective action can be taken at each ply if needed rather than waiting for other non-destructive inspection techniques that require the full fuselage barrel to complete fabrication and cure. Detecting an inconsistency after full fabrication can be much more costly due to rework and waste. Depending on the type and placement of the inconsistency, the entire part might have to discarded and rebuilt. In other cases, the overlying structure that could be within tolerance is removed to disposition the buried inconsistency that is outside of tolerance.

Compared to a smooth regular tape ply without wrinkle, void, or foreign object debris, the gas flow across a surface inconsistency will not present a single stagnation point that is concentric with the gas jet applicator. Rather, similar to that observed from meteorological or satellite imagery of cloud systems that are shaped and formed as they move across mountainous terrain, when the cool gas flows across a wrinkle in the composite skin structure, the infrared camera will detect unique gas flow patterns and illustrative inconsistency signatures that are associated with distorted ply surfaces.

In some illustrative embodiments, the tape is heated and compressed as part of the tape laying process. In this case, an inconsistency in the heated tape would further contrast with the cool laminar gas. Thus, in this illustrative embodiment, contrasting infrared detection of the contrasting temperatures is easier, especially initially prior to cool down of the heated tape.

Flow visualization of the cooled laminar flow is completed through infrared photogrammetry, in which topographical features of the flow can be numerically mapped using digital imaging processing. Infrared photogrammetry is one of several such techniques commonly practiced in industry for gas flow visualization (i.e., Schlieren shadowgraphs and laser velocimeters). Aerodynamic flow visualization is analogous to eddy current techniques. For this particular application, infrared photogrammetry is leveraged in conjunction with a computational technique such as digital image correlation to calculate surface distortion, and alert the fabrication team if an inconsistency is beyond a process control threshold. This threshold may be predetermined based on testing and structural analysis.

The illustrative embodiments contemplate different modes of operation of the illustrative embodiments. Thus, the illustrative embodiments are not limited to only image comparison. For example, across the spatial geometric surface being inspected, the infrared camera may be used to gather a numerical database of intensities with high resolution. In a specific, non-limiting example, each 0.5" cm x 0.5" cm square centimeter surface may be assigned a numeric value of infrared light intensity. The contrast in intensities of inconsistent surfaces is compared to pristine surfaces in order to detect inconsistencies. This square centimeter surface sample is defined as a "pixel" when reconstructing the image. The image is thereby made of many "pixels", depending on the camera resolution.

Thus, the contrasting method can be as simple as comparing the numerical light intensity values (assigned to each pixel) of a pre-defined or pre-measured pristine surface which resides in a database. The controller continuously compares the pre-defined data to the data taken in real time in order to detect inconsistencies.

Thus, for example, the illustrative embodiments can also include contrasting a first data set of the gas flow on the tow with a second data set of the gas flow on the tow. The method also includes sensing for inconsistencies, and especially inconsistencies which are out of tolerance, on the tow based on a contrast between the first data set and the second data set. The first data set is in the form of an image or pixelated light intensity of the tow without inconsistency obtained beforehand in a laboratory setting or during process implementation. The first data set is the nominal representation of the pristine, ideally impacted tow surface, also known as the 'control'. The second data set is in the form of an image or pixelated light intensity of the tow, but is not a representative sample, but rather it is the raw 'as measured' diagnostic. The second data set is used as a metric for determining conformance to specification or requirements, and can be representative of regular or irregular gas flow.

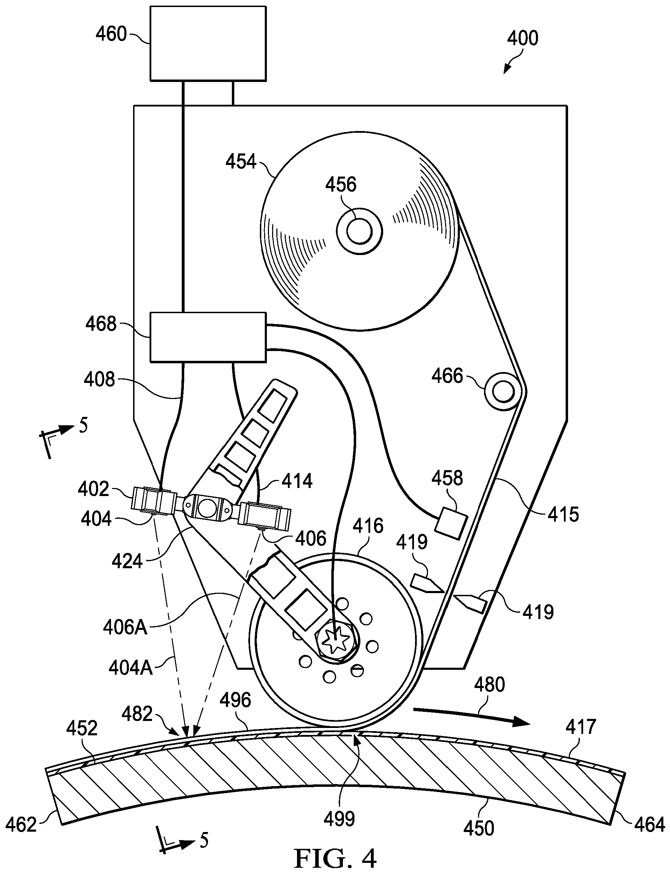

**Figure 4** through **Figure 9** show various perspectives of a tape laying device. Thus, objects common to these figures contain similar reference numerals. **Figure 4** through **Figure 9** show different views of the same device. The various isometric renderings of the Figures may help the reader conceptualize the components and their connectivity three-dimensional space.

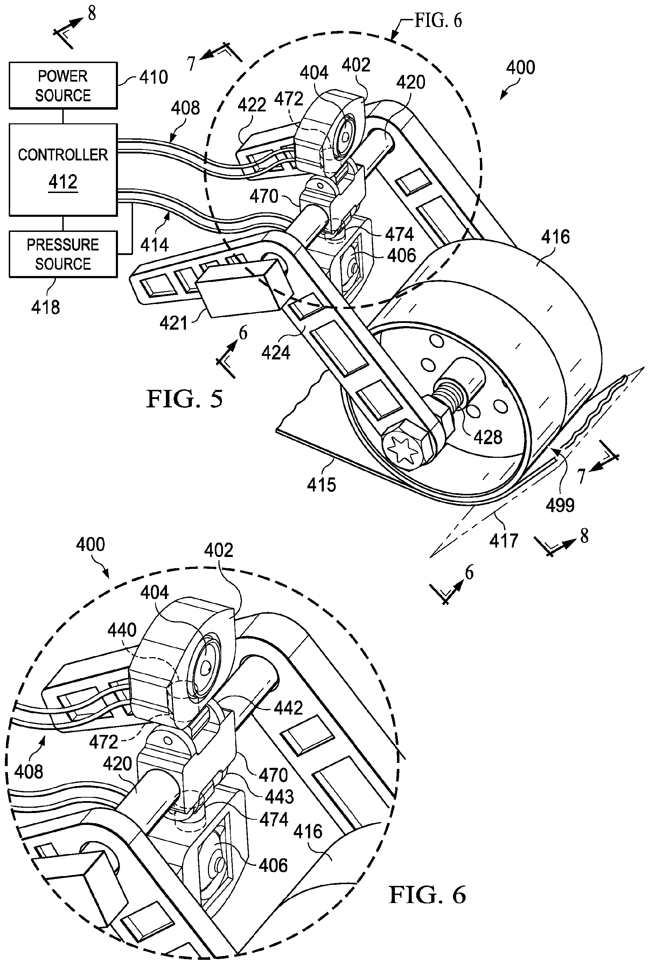

**Figure 4** illustrates an apparatus for disposing an elongate tape during formation of a composite member, in accordance with an illustrative embodiment. **Figure 4****,** there is schematically illustrated an apparatus **400** for disposing an elongate tape **415** during formation of a composite member **417,** according to one embodiment of the present invention. Composite member **417** also may be referred-to as a workpiece. Composite member **417** is laid up onto mandrel **450** by application of tape **415.** Layer **496** is tape **415** just after having been laid. Apparatus **400** is an example of an apparatus that may receive or be modified to receive apparatus **400** of **Figure 5** through **Figure 9****.**

The apparatus **400** can be used to form composite members **417** of a variety of materials and having various configurations. In particular, the apparatus **400** can be used to dispose one or more pieces of elongate tape **415** that includes a reinforcement material, typically unidirectional fiber, disposed in a matrix material. The tape **415** can be provided in various sizes and shapes, typically being long rectangular strips having a width of 7.62 cm, 15.24 cm, or 30.48 cm (3 inches, 6 inches, or 12 inches) . The strips are cut to length by cutter **419** near the roller nip **499** with the layup surface. Typically, the reinforcement material in tape **415** is a plurality of fibrous members such as fibers, strands, braids, woven or nonwoven mats, and the like of materials such as fiberglass, metal, minerals, conductive or nonconductive graphite or carbon, nylon, aramids such as KEVLAR^{®}, a registered trademark of E.I. du Pont de Nemours and Company, and the like.

Each tape **415** typically includes the matrix material, in which the reinforcement members are disposed. In some cases, however, the tape **415** can be formed without the matrix material, and the matrix material can be disposed separately. In any case, the matrix material can include various materials such as thermoplastic or thermoset polymeric resins. Exemplary thermosetting resins include allyls, alkyd polyesters, bismaleimides (BMI), epoxies, phenolic resins, polyesters, polyurethanes (PUR), polyurea-formaldehyde, cyanate ester, and vinyl ester resin. Exemplary thermoplastic resins include liquid-crystal polymers (LCP); fiuoroplastics, including polytetrafiuoroethylene (PTFE), fiuorinated ethylene propylene (FEP), perfiuoroalkoxy resin (PFA), polychlorotrifiuoroethylene (PCTFE), and polytetrafiuoroethylene perfiuoromethylvinylether (MFA); ketone-based resins, including polyetheretherketone (PEEKTM^{®}, a trademark of Victrex PLC Corporation, Thointons Cleveleys Lancashire, UK); polyamides such as nylon-6/6, 30% glass fiber; poly ethersulfones (PES); polyamideimides (PAIS), polyethyl enes (PE); polyester thermoplastics, including polybutylene terephthalate (PBT), polyethylene terephthalate (PET), and poly(phenylene terephthalates); polysulfones (PSU); poly(phenylene sulfides) (PPS).

As discussed further below, the tape **415** can be disposed to define a desired configuration of the composite member **417.** In particular, the tape **415** can be disposed to form members of various sizes and shapes. The unidirectional tape is typically laid side-to-side at a particular orientation for an entire ply and may have a different orientation in subsequent plies. For example, the composite member **417** can be for a wing and/or fuselage of an aircraft, or any other suitable component. In other embodiments, the composite member **417** can be used as other airfoils, aircraft body panels, other members for aerospace vehicles and structures, structural members of automobiles, marine vehicles or other vehicles, and the like. In some cases, the composite member **417** can define a complex geometry, e. g., one or more contours that are curved about multiple axes, define bends, apertures, or other irregular shapes, and the like. The apparatus **400** can generally define a tape placement head that is used to dispose the elongate tape **415** in a configuration corresponding to the desired shape of the composite member **417.**

For example, as illustrated in **Figure 4****,** the apparatus **400** can dispose the elongate tape **415** onto a mandrel **450,** i.e., a tool with, in this case an inner mold line (IML) surface **452** that is then imparted to the tape **415** and, hence, the composite member **417.** Tape is laid continuously, or perhaps non-continuously in different illustrative embodiments, by moving apparatus **400** in the direction along arrow **480.** Alternatively, composite member **417** could be rotated under apparatus **400,** or both composite member **417** and apparatus **400** may be moved relative to each other.

It is appreciated that various types of mandrels can be used, and the mandrel **450** can define a variety of contours. In particular, the surface **452** of the mandrel **450** can define a complex contour on which it would be challenging to place tapes. Also, while it is generally described herein that the tape **415** can be disposed "on" the mandrel **450,** it is appreciated that a first layer of the tape **415** may be disposed directly on the mandrel **450** and subsequent layers may be disposed on the prior layers. The apparatus **400** includes a supply of one or more elongate tape **415,** which is dispensed and disposed onto the surface **452.**

For example, the tape **415** can be supplied in a dispenser, such as a roll **454** that is supported on a spool **456** mounted in the apparatus **400.** In some cases, the dispenser can include multiple rolls or other supply devices that provide multiple tape **415** to be simultaneously disposed on the mandrel **450.** Note that it is possible to place multiple units **400** in parallel to lay parallel tapes simultaneously on a surface. Alternatively, a single tape **415** can be disposed in one or more portions. For example, a single tape **415** can be severed into multiple portions that are disposed successively on the mandrel **450,** or the single tape **415** can be disposed continuously on the mandrel **450** as a single piece without being severed. That is, the "plurality of tapes" or "multiple tapes" referred to herein can be disposed as a single piece of tape that defines a plurality of adjacent elongate portions.

In the embodiment illustrated in **Figure 4****,** the spool **456** supporting the roll **454** is rotatably mounted so that the tape **415** can be dispensed therefrom. The tape **415** is supplied from the roll **454** to a placement guide that controls the placement of the tape **415** on the mandrel **450.** The placement guide can be a compaction roller **416,** as shown, that is rotatably mounted so that the apparatus **400** can be moved over the surface **452** of the mandrel **450** with the compaction roller **416** in rolling contact therewith.

Thus, the apparatus **400** can apply a force via the compaction roller **416** in a direction generally towards the mandrel **450** so that the compaction roller **416** exerts compaction pressure on the tape **415** to press it against the mandrel **450** and/or prior applied plies in a compaction region or compaction nip. The compaction roller **416** can also be adjustably mounted by mounts, such as L-Bracket **424,** which can adjust relative to the rest of the apparatus **400** so that the compaction roller **416** can apply varying pressures against the tape **415** and mandrel **450** or otherwise control the placement of the tape **415.** Heating device **458** may be provided to heat tape **415.**

While compaction roller **416** is depicted, other types of compaction devices may be utilized, such as a compaction shoe or a press. The apparatus **400** is moved relative to the mandrel **450** by a drive assembly **460,** which is schematically indicated in **Figure 4****.** The drive assembly **460** can include various drive devices such as pneumatic or hydraulic actuators, electrical motors or servos, and/ or chain, gear, or shaft drive mechanisms. The drive assembly may be an end effector on a robot. The drive assembly **460** can be configured to move the apparatus **400** or the mandrel **450** to achieve the desired relative placement of the apparatus **400** relative to the mandrel **450** for disposing the tape **415** over the surface **452** of the mandrel **450.**

Typically, the apparatus **400** is moved generally linearly along arrow **480** along the surface **452** of the mandrel **450** in multiple passes, with one or more portions of the tape **415** being disposed in each pass. For example, the apparatus **400** can move from a first end **462** of the mandrel **450** to an opposite end **464** to dispose one or more pieces of tape **415,** then return to the first end **462** to start another pass in the same direction to dispose additional tape **415** relative to tape disposed in the previous pass. Apparatus **400** can also lay tape in the reverse direction from side **462** to side **464.**

Alternatively, the apparatus **400** can wrap one or more tapes **415** in continuous passes around the mandrel **450,** with the position and/or direction being adjusted between each pass so that the tape **415** is disposed in adjacent portions. Additionally, the direction of the pass may be also dependent upon the orientation of the ply being applied.

The apparatus **400** can also include various other components. For example, roller **466** can be used to guide the tape **415** through the apparatus **400,** as well as control tape tension. Any number of rollers can be provided, and in some cases, some or all of the rollers can be driven by a motor or other actuator to control the motion of the tape **415,** such as drive assembly **460.** In another illustrative embodiment, the rollers could be unpowered, but biased tensioned or not under tension.

In addition, the apparatus **400** typically includes a heating device **458** for heating the tape **415** and/ or the mandrel **450.** The heating device **458** can be a laser, a laser diode array, a hot gas torch, an electric heater, an infrared heater or the like. The heating device **458** typically delivers sufficient energy to permit the tape **415,** once subjected to the compaction forces, to tack to the underlying tape **415.** The heating device **458** can include multiple independent heating elements, such as multiple laser diodes that form an array. Each heating element can be coupled to a power source in a manner independent of the other laser diodes so that the operating power of each heating element can be controlled independently of the other heating elements. Heater **458** is typically located near compaction nip **499,** though the location shown is exemplary only and does not limit the illustrative embodiments to other placements of heater **458.** Specifically, other locations near the compaction nip are contemplated.

Non-uniform heating of the zones may be desirable, for example, if the tape **415** is not the same size or are not made of the same materials and thus require different amounts of energy to attain their optimum temperature for placement. Also, different amounts of heating may be desirable due to the geometry of the mandrel **450.** The heating device **458** can electrically communicate with a controller **468** configured to control the heating device **458.** The controller **468** can also perform other functions, for example, functions integral to inspection, speed control, temperature and velocity sensing, defect marking, and the like.

For example, the apparatus **400** can have effector frame **402** that includes cameras, temperature sensors, pre-placement detectors, tack monitoring devices, and the like for monitoring the tape **496** after having been laid, as described with respect to **Figure 5** through **Figure 9****.** Additionally, the apparatus **400** can include a marking device (not shown) for marking defects or other designated portions of the composite member **417.**

Effector frame **402** may be effector frame **402,** as shown in **Figure 5** through **Figure 9****.** Again, effector frame **402** supports camera array **404** and gas nozzle **406.** Thus, the **Figure 4** illustrates how an automatic tape laying apparatus can be modified to include the illustrative embodiments described herein.

In use, both camera array **404** and gas nozzle **406** may be pointed at gas impingement point **482,** as indicated by arrow **404A** and arrow **406A.** Gas impingement point **482** is the point where laminar gas flow from gas nozzle **406** impinges on surface **452** of tape **496.** Thus, arrow **404A** represents a center of a line of sight of camera array **404** and arrow **406A** represents a direction of a central axis of an air flow emitted from gas nozzle **406.** As shown, gas impingement point **482** is located on recently laid tape **496,** which is to be inspected immediately after being laid. In an illustrative embodiment, the line of sight of the camera array **404** is aimed at impingement point **482** to view possible non laminar flow over the just laid tape **496** The details regarding how video data from camera array **404,** taken by observing the gas flow from gas nozzle **406** on gas impingement point **482,** can be used to inspect just laid tape **496** are described further, below. Note that the term "gas impingement point" contemplates not only a single point on the tape, but also entire areas of the tape, including an entire width of tape **415** and even possibly an area that includes multiple tape widths that might be laid concurrently and parallel to just laid tape **496.**

The gas nozzle **406** and camera array **404** are aimed at impingment point **482** on the just laid tape **482** near the compaction nip **499.** The impingement point **482** shown is for illustration only, as the impingement point **482** could be even closer or upstream to the compaction nip **499** or further downstream or away from the compaction nip **499** than shown. The impingement point **482** is also the inspection point.

**Figure 5** illustrates is an isometric representation of an automatic fiber placement end effector with laminar gas cooling jet and IR image detector, in accordance with an illustrative embodiment. Apparatus **400** may be used with the techniques described, such as method **300** of **Figure 3****,** to build components such as aircraft **100** of **Figure 1** or fuselage **200** of **Figure 2****.** **Figure 5** is an alternative view of apparatus **400** shown in **Figure 4****,** though with various components not shown in order to emphasize certain features in the view presented in **Figure 5****.** Note that these features may be varied; for example, not all devices need to have additional rollers, such as roller **466** in **Figure 4****.** Other various are also possible.

Turning now to **Figure 5****,** apparatus **400** includes effector frame **402** which supports camera array **404** and gas nozzle **406.** Camera array **404** may be a high-resolution charged couple device (CCD) configured to detect infrared wavelengths. In one illustrative embodiment, camera array is an infrared camera, though cameras sensitive to other wavelengths are possible. Camera array **404** is connected to power and data lines **408** which provide power to camera array **404** from power source **410** and allow transmission of data back and forth to controller **412.** Power source **410** may be any convenient means for generating electrical power for camera array **404.** Controller **412** may be a processor configured to control operation of camera array **404** as well as for controlling operation of gas line **414,** and even possibly for controlling operation of compaction roller **416.** Compaction roller **416** applies and compacts tape **415** to surface **417.** Controller **412** may be the feedback controller described with respect to **Figure 3****.** Although a compaction roller is depicted, other types of rollers and compaction devices are contemplated by the illustrative embodiments. Controller **412** can cause camera array **404** to automatically zoom in on gas impingement point **482** (see **Figure 4**). Aiming camera array **404** may be automated. Aiming camera array **404** may include zooming-in specifically on a gas stagnation point, on a detected inconsistency, on a particular portion of tape **415** other aspects of gas flow on gas impingement point **482,** or combinations thereof. Aiming may also be performed automatically using a feedback system in which camera array **404** is automatically controlled to follow one or more aspects of the inspection or monitoring process, such as for example to keep track of moving stagnation points. Many other combinations and uses of aiming and zooming camera array **404** are contemplated. As discussed further below, a similar aiming system for the gas nozzle **406** relative to composite member **417** is provided. Additionally, also as described below, a controller **412** may control gas flow volume and laminar gas flow control.

Returning to effector frame **402,** as indicated above, this component also holds gas nozzle **406.** Gas nozzle **406** may be configured to emit a jet of laminar flow of gas, such as but not limited to air, nitrogen, helium, argon, or many other, preferably inert, gasses. Gas nozzle **406** is connected via gas line **414** to pressure source **418.** Pressure source may be any suitable means for pressurizing gas and/or cooling gas for delivery to gas nozzle **406.** The source of cool gas need not be the same as pressure source **418.** In some illustrative embodiments, a suitable gas source other than air may be used, such as but not limited to helium, argon, neon, nitrogen, oxygen, or any other suitable gas for an intended tape laying or tape pressing operation.

Note that in the case of an infrared camera, camera array **404** may be used to measure a temperature of the gas, both as dispensed immediately from gas nozzle **406** and as that gas impinges on gas impingement point **482.** In addition, other temperatures of surrounding areas, including but not limited to the recently laid layer **496,** may be measured using the infrared camera. Temperature measurements are possible by noting wavelength differences in the infrared light, as detected by camera array **404,** and correlating those detected wavelength differences to temperatures using a known mathematical formula.

The measurement of temperature of various aspects of the tape laying process and of the inspection process allow for temperature control feedback techniques. For example, if a different amount of contrast is needed to detect certain types of inconsistencies, then temperature readings can be used to control the temperature of the gas being dispensed from gas nozzle **406.** In another illustrative embodiment, the starting, stopping, and speed of the actual tape laying and inspection processes can be adjusted based on desired temperature differences between the gas and the layer **496** of the tape. Other temperature feedback control mechanisms are contemplated.

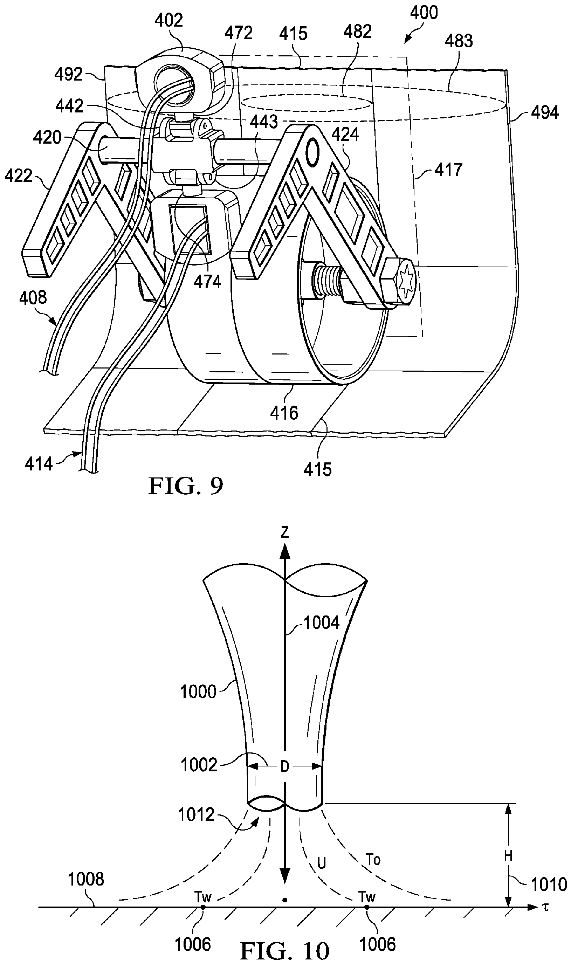

The rate of gas flow is dependent on several factors including, but not limited to, (1) the spray dispersion properties of the gas source, (2) the selected type and diameter of orifice nozzle. As explained with respect to **Figure 10****,** the diameter of the nozzle could be adjustable. Note also that when camera array **404** is an infrared camera, feedback from the infrared camera could be used to measure dispensed gas temperature, the laminar nature of gas flow, dispersion patterns of gas flow, etc., for calibrating of the nozzle. In addition to (1) and (2) above, the rate of gas flow may also be dependent on (3) the distance from the outlet orifice to the datum surface being interrogated, and (4) the programmed spool speed of the tape applicator. Based on these factors, the rate of gas flow is constrained by a range of low velocity Reynolds numbers, Re, which envelope a minimum and maximum gas flow velocity that have been empirically determined. The gas flow may result in ideal vortex laminar flow properties for highest resolution in infrared detection capability. The Reynolds number is defined as Re = ρUD/µ = UD/v. For this equation, ρ is the density of the gas source, U is the flow speed or velocity of the gas source, D is the characteristic length in this case the flow diameter which is determined by the orifice diameter, µ is the dynamic viscosity, and v is the kinematic viscosity of the gas source.

In an illustrative embodiment, effector frame **402** may be free floating with respect to the rest of apparatus **400,** that is supported only by power and data line **408** and gas line **414.** In other illustrative embodiments, effector frame **402** may be connected to some other portion of apparatus **400.** In other illustrative embodiments, the air nozzle **406** and camera array **404** can be tilted on the rod **420** to move the impingement point **482** closer or further from the compaction nip **499.** For example, rod **420** or other rigid member may connect effector frame **402** to a housing of apparatus **400,** which in this case includes L-bracket **422** and L-bracket **424.** Thus, the housing of apparatus **400** may be termed an L-shaped housing. However, many other housing shapes and types are contemplated. Nevertheless, for the illustrative embodiment shown in **Figure 5****,** together L-bracket **422** and L-bracket **424** may be termed a pair of L-shaped brackets.

Nevertheless, because effector frame **402** may be attached to and modify a pre-existing end effector, the housing and arrangement of components for apparatus **400** may vary tremendously. Thus, while apparatus **400** shows the use of L-bracket **422** and L-bracket **424** holding compaction roller **416** via axle **428,** many other arrangements are possible for where and at what orientation effector frame **402** is placed on apparatus **400.** Thus, for example, compaction roller **416** may or may not perform tape compaction. Other tape applicators are also possible and are not necessarily limited to a roller such as that shown in **Figure 5****.** Thus, for example, heater **458** (see **Figure 4**) may be present to heat the tape.

However, effector frame **402** is connected to or associated with apparatus **400,** effector frame **402** should be disposed with respect to apparatus **400** in such a way as to allow a cool gas jet from gas nozzle **406** to be directed onto tape as it is being laid by compaction roller **416** and subsequently inspected by camera array **404.** Thus, effector frame **402** could be situated at different angles, and not necessarily vertically disposed with respect to apparatus **400,** as shown in **Figure 4** and in **Figure 5****.**

Other variations are possible. For example, more ports may be provided for additional infrared cameras or for other types of cameras that operate at different wavelengths of light, including radio, microwave, infrared, visible, ultraviolet, and X-ray. Similarly, more than one gas nozzle may be present. Cameras of different types may be combined on one end effector frame. Multiple end effector frames may be provided for end effectors that have multiple tape applicators. Each of camera array **404** and gas nozzle **406** may be provided with individually controllable swivel mounts, such as mount **470** in combination with rotatable pin **472** or rotatable pin **474** and/or hinge **442** and hinge **443,** such that camera array **404** and gas nozzle **406** may be directed towards different angles during operation of apparatus **400.** One or more of these components may be actuated by one or more servo motors, such as servo motor **421.**

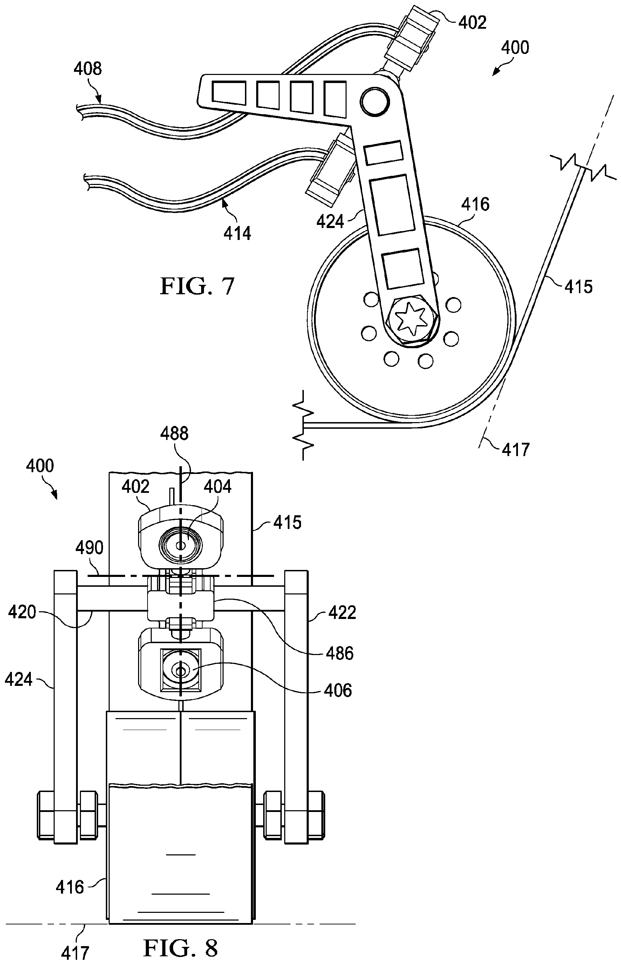

The joints shown above for articulating one or more of camera array **404** and gas nozzle **406** may take different forms. For example, articulation may be accomplished through the use of spherical joints or other types of universal joints that allow for two or even three-dimensional articulation, with both camera array **404** and gas nozzle **406** being articulatable independently in some cases, thereby making both infinitely adjustable and capable of being aimed in any direction. In other illustrative embodiments, camera array **404** and gas nozzle **406** may be fixed relative to each other. Three-dimensional articulation means that camera array **404** and gas nozzle **406** may move up and down relative to center **486** of effector frame **402** along axis **488** (see **Figure 8**), and may also twist back and forth about central axis **488** of effector frame **402** (see **Figure 8**), and may also swivel back and forth about longitudinal axis of a hinge, such as about longitudinal axis **490** (see **Figure 8**). The feedback sensing for the feedback control for positioning of the gas nozzle **406** and the camera array **404** relative the impingement point **482** could be provided by imaging from the camera array **404.** Actuators could be provided to adjust the gas nozzle **406** and the camera array **404.**

**Figure 6** through **Figure 9** show different perspectives of apparatus **400.** Thus, these figures share common reference numerals which refer to similar structures as those described with respect to **Figure 4** through **Figure 9****.**

**Figure 6** illustrates a magnified view of the cooling jet, in accordance with an illustrative embodiment. In this view, the end effector **402** with camera array **404** and jet nozzle **406** are emphasized.

**Figure 7** illustrates a side view representation of the automatic fiber placement end effector shown in **Figure 5****,** in accordance with an illustrative embodiment. Again, apparatus **400** is shown with effector frame **402,** power and data line **408,** gas line **414,** L-bracket **424,** and compaction roller **416.** Tape **415** may extend out of view relative to what is shown in **Figure 5** **and** **7****;** for example, see **Figure 4** for one possible arrangement of tape **415.**

The illustrative embodiments enable at least two different configurations. The first configuration is an equivalent number of gas sources and sensors as parallel tape tow applicators. The second configuration, depending on tow width and number of parallel applicators, is a single gas source or sensor package that could be used for the entire applicable area. The preferred configuration would be dependent on manufacturing trials, data collection, and costs of the source or sensor package.

Additionally, multiple compaction rollers, effector frames, gas nozzles, and camera arrays may be present. For example, there could be 8, 16, 24, 32, or more or fewer devices, arranged in parallel or otherwise, dispensing and compacting tape simultaneously and being sensed by 8, 16, 24, 32, or more or fewer gas nozzles and camera arrays. In other illustrative embodiments, one sensor system could deal with more than one tape tow. Still further variations are possible.

With regard to the laying of tape, tape is laid until the end of the tape laying path is reached with the gas flowing over the heated and just compacted tape to continuously sense the surface just laid until the end of the path is reached. A trigger between the compaction roller activation and the gas flow may be present from the controller to control gas flow and camera actuation.

**Figure 8** illustrates a front view representation of the automatic fiber placement end effector shown in **Figure 4****,** in accordance with an illustrative embodiment. Again, apparatus **400** is shown with effector frame **402,** camera array **404,** gas nozzle **406,** L-bracket **422,** L-bracket **424,** and compaction roller **416.** Center **486** of effector frame **402,** along with central axis **488** and longitudinal axis **490** are shown for reference.

**Figure 9** illustrates a rear overhead view representation of the automatic fiber placement end effector shown in **Figure 4****,** in accordance with an illustrative embodiment. Again, apparatus **400** is shown with effector frame **402,** power and data line **408,** gas line **414,** L-bracket **422,** L-bracket **424,** and compaction roller **416.**

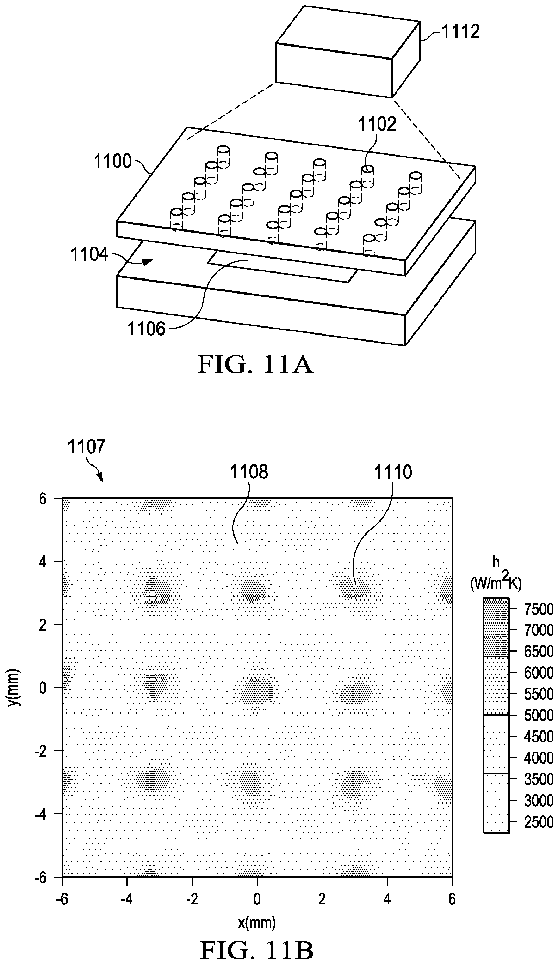

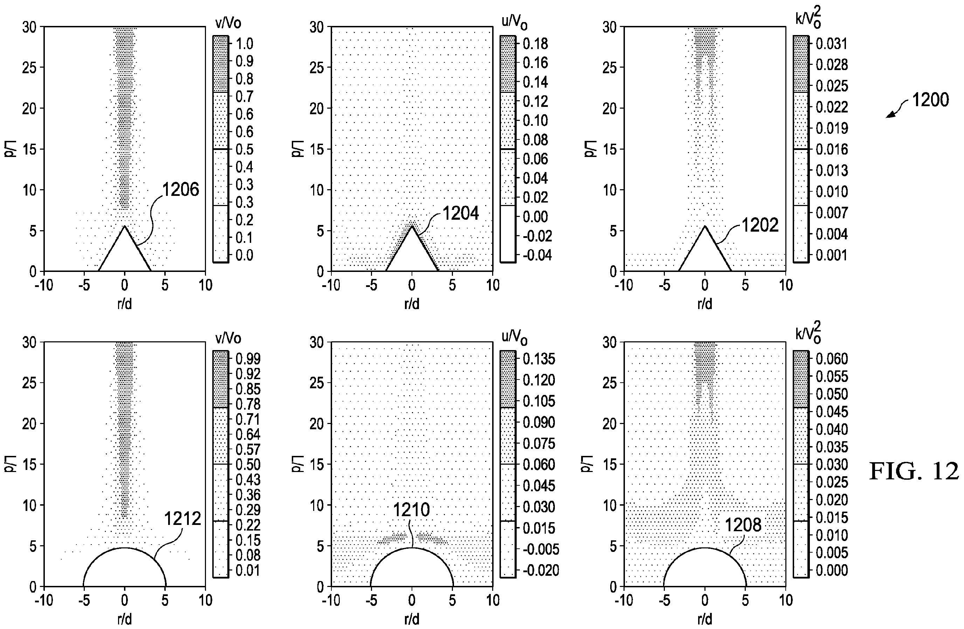

In some illustrative embodiments, configuring the gas nozzle fixed orthogonal to the impinging surface would be preferable. In this case, a programmed, servo-control arm, such as servo **421,** can manipulate rotation angle of the camera array. The control arm could be rod **420** controlled by servo motors **421.** In the figures shown, the camera array and gas nozzle may be statically configured in the same plane; however, in **Figure 11** and **Figure 12****,** the infrared detector is shown orthogonal to flow direction.

Alternatively, or in addition, rotatable pin **472** and rotatable pin **474,** together with and hinge **442** and hinge **443,** may allow camera array **404** and gas nozzle **406** to rotate to the right and left relative to compaction roller **416.** Rotatable pin **472** and rotatable pin **474** may exist at the midpoint of end effector **402,** and the incident camera angle could be varied continuously from 0 degree (orthogonal to tape surface and parallel to flow direction) to 90 degrees (orthogonal to flow direction and parallel to tape surface). Some illustrative embodiments may not need variable control of hinge **442,** hinge **443,** rotatable pin **472** or rotatable pin **474.**

In this case, a permanent L shaped sensor housing would be used. For this illustrative embodiment, gas nozzle **406** is assembled on one side of the housing, such as L-bracket **422** or L-bracket **424,** and camera array **404** is assembled on the orthogonal plane of the other L-bracket. Still other arrangements are possible. Thus, the illustrative embodiments are not necessarily limited to these examples.

The view shown in **Figure 9** also helps to show gas impingement point **482** as being, potentially, more than a single point on tape **415.** Again, gas impingement point **482** is an area where laminar gas flow from gas nozzle **406** impinges on tape **415.** Gas impingement point **482** may be termed an inspection area. In the example shown in **Figure 9****,** gas impingement point **482** is about a width of tape **415.** However, in other illustrative embodiments, gas impingement point **482** may be smaller than the width of tape **415,** including possibly a very small area within tape **415** (that is, an inspection of a narrow band within tape **415**).

In still other illustrative embodiments, gas impingement point may be wider than tape **415.** For example, assume that multiple tapes are being laid in parallel next to apparatus **400,** as indicated by tape **492** and tape **494.** (Additional apparatuses similar to apparatus **400** are omitted from **Figure 9** for clarity, but these are impliedly present for laying down these additional rows of tape - additional inspection tools like those described above may or may not be present on these additional tape-laying apparatuses. In this case, gas impingement point **482** may be a width of multiple tapes simultaneously, such as including an area on tape **415** as well as part of all of widths of tape **492** and tape **494.** When gas impingement point **482** extends across part or all of the widths of tape **492** and tape **494,** camera array **404** (or possibly multiple camera arrays on multiple apparatuses) may be used to inspect multiple tapes simultaneously within the relatively large gas impingement point **482.** Of course, when multiple apparatuses are used, each with their own camera array and gas nozzle, then one or more controllers may inspect the different tapes being laid, independently.

For example, large gas impingement point **483** is shown in **Figure 9****.** Large gas impingement point **483** is deemed "large" simply because it is larger than gas impingement point **482.** Large gas impingement point **483** extends across all three tapes, tape **415,** tape **492,** and tape **494,** and all three are inspected using camera array **404** simultaneously in this particular illustrative embodiment.

In yet another variation, gas impingement point **482** and large gas impingement point **483** may be have a variety of shapes, not just the elliptical shapes shown in **Figure 9****.** Additional shapes may be accomplished by varying the gas nozzle **406,** as described, for example, with respect to **Figure 10****.**

Thus, many variations of the illustrative embodiments are possible. Accordingly, the examples described with respect to the figures do not necessarily limit the other illustrative embodiments described herein.

**Figure 10** illustrates the automated fiber placement end effector of **Figure 4** through **Figure 9** in use, together with flow and stagnation characteristics of a jet impinging on a flat surface, in accordance with an illustrative embodiment. Nozzle **1000** may be nozzle **406** in **Figure 4** through **Figure 9****.** Nozzle **1000** is defined by an aperture having diameter, **D 1002,** and a central axis, Z **1004.**

Note that nozzle **1000** has an end **1012.** End **1012** is shown as circular in **Figure 10****.** However, end **1012** may have a variety of different shapes, such as but not limited to oblong (for wider gas flow impingement points), square (for different gas flow patterns), or any other desirable shape. The aperture size of the nozzle could be variable and the variability could be automated. A width or diameter of end **1012** may change a size of a gas impingement point, as described with respect to **Figure 9****,** and/or possibly a distribution profile of gas from end **1012** of nozzle **1000.** A distribution profile of gas may be, and preferably is, a laminar gas flow. However, the distribution profile need not be laminar in some illustrative embodiments, and whether laminar or non-laminar, the gas distribution profile may be a jet of gas or some other stream of gas. Thus, the illustrative embodiments are not necessarily limited to the example shown in **Figure 10****.**

Gas flow is shown by the arrows in **Figure 10****.** A wall jet region forms along between points Tw **1006** on surface **1008** (corresponding to a surface of tape **417,** for example), though a stagnation point forms near the central axis, Z **1004** of nozzle **1000.** Flow arcs "U" and "T₀" are shown in **Figure 10****.** Nozzle **1000** is disposed at a height "H" **1010** above surface **1008.**

One configuration of the illustrative embodiments is orthogonal flow direction to the layup surface. However, alternate configurations are possible and would best be determined during manufacturing trials for a particular project.

In terms of flow characteristics, however, two configurations are described. Each flow configuration potentially has their own unique benefits. For example, in one configuration, in which the flow is directed normal to the layup surface, what is meant by "laminar" is in direct reference to the initial flow velocity and streamline properties as it exits the orifice outlet, well before or "upstream" of making contact on an impinging surface. The flow is termed "laminar" as it maintains an enveloping space of Reynolds numbers, Re, which are dimensionless. Laminar flow is typically characterized by Re less than about 2300. For Reynolds numbers greater than this threshold, the flow begins to transition with undesirable turbulent qualities. Laminar flow is also dependent on the gas source, flow velocity, and orifice diameter. Once the flow orthogonally impacts the "wall" or impinging surface, vortex flow and turbulent mixing of gas can occur, and a boundary layer will form.

In another configuration, gas flow is parallel to the layup surface. In this case, a smooth boundary layer will form immediately. Inconsistencies, or topographical anomalies in the control volume or layup surface could cause turbulent mixing of gas in this case. However, stagnation will not be as prevalent or obvious of a central feature in the imagery.

The first configuration described above provides the best opportunity to monitor variations in the spatial features of the stagnation point region (velocity = 0) on the layup surface. The first configuration provides this best opportunity because the nominal stagnation signature on a flat pristine layup surface will present symmetry. In contrast, stagnation signature on a surface with inconsistencies will appear asymmetric, in which case the inconsistency will be easily identified.

Other flow patterns are also possible. For example, gas flow need not be orthogonal or parallel to the surface of tape **417,** but could also be at any other angle in between.

**Figure 11A** illustrates a flat plate with multiple met orifices. **Figure 11B** illustrates atop view of a two-dimensional contour plot **1108** indicating gas flow stagnation points, such as point **1110,** projected onto a flat plate **1104 (****Figure 11A****).** The gas flow stagnation points such as stagnation point **1110,** are concentric to the locations of the jet orifices, such as jet orifices **1102,** in accordance with an illustrative embodiment.

**Figure 11a** shows flat plate **1100** includes jet orifices **1102** being blown onto flat plate **1104.** Flat plate **1104** may be a heated surface. Note that because, in the illustrative embodiments, the gas jet is cool, a tape laying device may be considered "heated" relative to the gas jet. This temperature difference may be because the gas is cooled, the tape or tape laying device is heated, or a combination of both. Graph **1107** in **Figure 11b** shows jet stagnation regions **1108** where cold gas rests against flat plate **1104.**

**Figure 11b** indicates a two-dimensional contour plot **1107** indicating gas flow stagnation points **1108** projected onto a flat plate **1104,** which are concentric to the location of the jet orifices **1102.** This data output is captured from a high-resolution infrared camera, and is the most similar computational method (i.e., infrared photogrammetry) for capturing the skin inconsistencies detectable using the illustrative embodiments.

Unlike this example, for non-flat surfaces (i.e., which would be created from inconsistencies such as a wrinkle or foreign object debris), the out-of-plane curvatures and ridges create a distorted thermal contour plane that changes the shape of the jet stagnation region **1108,** preventing it from being concentric to the nozzle or jet orifices **1102.** As used herein, "concentric" refers to the stagnation point being concentric to the jet impingement point on the laid-up surface.

Infrared camera **1112** captures this data, as in the illustrative embodiment shown in **Figure 11****,** flat plate **1100** is substantially transparent to infrared light, or whatever wavelength of light is being used. Computational digital image correlation techniques are used to flag the inconsistency and alert the fabrication team. It is these changes to the stagnation region, such as stagnation point **1110,** which allow infrared camera **1112** to detect inconsistencies in the workpiece surface **1106** that should be dispositioned. Inconsistencies that should be dispositioned are those that are out of tolerance, not just those inconsistencies that are detected and identified.

Digital image correlation is a widely used computational tool for calculations related to photogrammetry techniques. A control image(s) is used, one that represents the pristine stagnation signatures of the impinging flow at a predetermined speed, gas type, and angle. There will be a range of acceptable stagnation signatures. This range is determined from manufacturing trials and concurred by a stress and structures team, as it relates specifically to wrinkle dimensions and characteristics. This range can be used as a means of determining whether an inconsistency is within or outside of tolerance. Thus, this range is a way to calibrate or understand the output and characterize it so that a user would know the meaning of what is being detected or the nature of what is being detected)

From this control group, a database stores this information. As raw inspection data is processed, the computer completes computations that characterize the pixel mapping. This process includes, but is not limited to, fast Fourier transform, short-time Fourier transform, continuous wavelet transform, and digital image correlation techniques.

For plain weave fabric, the geometry and positioning of the weave itself could be used to correlate multiple images. For uniaxial-tape or slit tape, a simple infrared laser pointer that is positioned at the exact spatial location on each image during acquisition will provide a universal reference point to be used during post-processing. Inconsistencies in the form of distortion (i.e. caused by wrinkles) of the weave pattern (or other point of reference) would be detected by comparing pixel by pixel of each raw image to the control database of images. Thresholds or flags in the controller are directly tied to the allowances the design and stress and structures teams deem appropriate. Again, this technique may be a means of determining whether an inconsistency is within or outside of tolerance.

**Figure 12** illustrates a series of graphs showing flow behavior of gas jet impinging on a variety of curved surfaces, in accordance with an illustrative embodiment. Thus, **Figure 12** is a variation of **Figure 11b****.**

Graphs **1200** show the appearance of stagnation points on differently shaped surfaces, such as surface **1202,** surface **1204,** surface **1206,** surface **1208,** surface **1210,** and surface **1212** over workpieces of various shapes. An example of such a workpiece is workpiece **1106** in **Figure 11B****.** This information can be used to detect and characterize inconsistencies on a complexly contoured workpiece by noting differences between expected stagnation points and observed stagnation points.

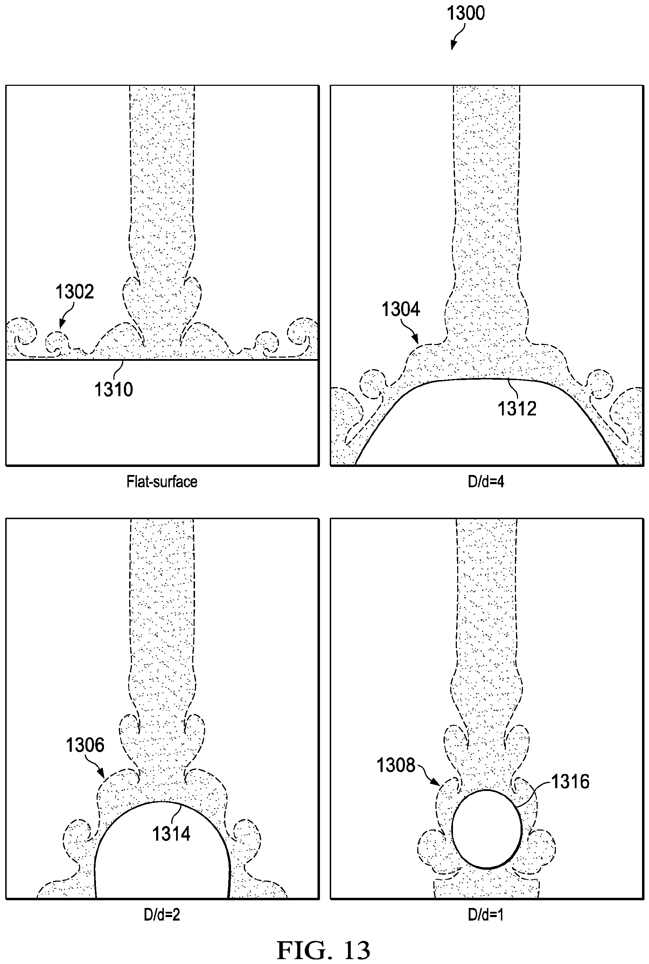

**Figure 13** illustrates effects of a gas jet impinging on complex cylinders, in accordance with an illustrative embodiment. **Figure 13** is a variation of **Figure 11b** and **Figure 12****.**

Graphs **1300** show the appearance of stagnation points, such as stagnation point **1304,** stagnation point **1306,** and stagnation point **1308** over different workpieces, such as workpiece **1310,** workpiece **1312,** workpiece **1314,** and workpiece **1316** of various shapes. This information can be used to detect and characterize inconsistencies on a complex workpiece, such as workpiece **1312,** workpiece **1314,** and workpiece **1316,** by noting differences between expected stagnation points and observed stagnation points.

Mushroom-shaped vortex dipoles, such as vortex dipole **1302** can also be used to detect the presence of inconsistencies. As described above with respect to turbulent flow, flow exiting the orifice is, by design, laminar substantially without turbulence. The vortex turbulent flow is stimulated by the effects of uneven surface geometries caused by inconsistencies.

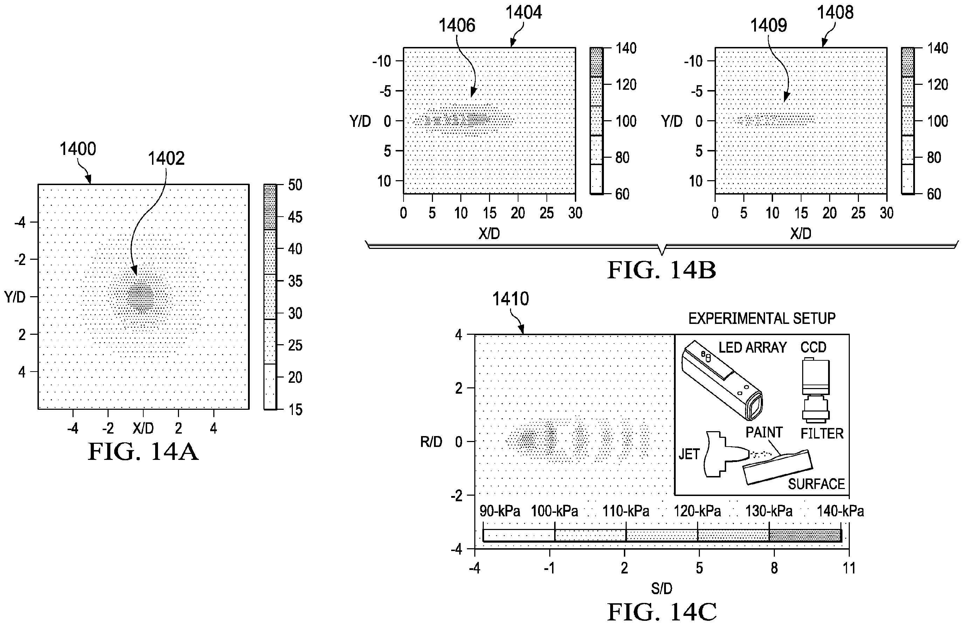

**Figure 14A** through **Figure 14C** should be read together. **Figure 14A** illustrates a pristine flat layup surface without inconsistencies, as detected according to the illustrative embodiments, in accordance with an illustrative embodiment. **Figure 14B** illustrates an example of an inconsistency, as detected according to the illustrative embodiments, in accordance with an illustrative embodiment. **Figure 14C** illustrates and example of a pressure distribution on the impingement surface of an underexpanded jet impinging on a flat surface at an inclined angle, in accordance with an illustrative embodiment. Together, **Figure 14A** through **Figure 14C** are representations of actual data taken using the techniques described with respect to **Figure 1** through **Figure 13****.**

For an infrared detector and flow direction orthogonal to layup surface, **Figure 14A** shows a pristine infrared mapping on a workpiece when no inconsistencies exist. As can be seen in graph **1400,** a fairly uniform series of concentric gas flow patterns (laminar flow), shown at area **1402.**

**Figure 14B** shows infrared mapping on a surface having an inconsistency; specifically, a wrinkled surface. Graph **1404** shows a smeared gas flow pattern (non-laminar flow) shown at area **1406.** Graph **1408** shows another type of smeared gas flow pattern (non-laminar flow) shown at area **1409.**

Graph **1410** in **Figure 14C** is data taken using a different technology, and indicates pressure, in which the gas jet at an incline impinges on a surface. Instead of inclining the jet, the illustrative embodiments are looking to find inconsistencies that are naturally at an incident angle to the jet, causing the shown change in stagnation signature. Thus, **Figure 14C** show that the illustrative embodiments are not only applicable to detecting inconsistencies in composites and tape, but also in coatings including but not limited to paint. Stated differently, the illustrative embodiments in **Figure 3** through **Figure 10** may be used to inspect a coating, such as but not limited to paint, using cool gas flow over a gas impingement point on the coating and data gathered from a camera array observing the gas impingement point to look for inconsistencies in the coating. For example, the camera array **404** and gas nozzle **406** described above could be attached to an automated painting device and used to inspect the just painted surface downstream of the application point. In this case, the gas impingement point or inspection area is just downstream of the paint application area.

Still further, the illustrative embodiments may also be used to inspect devices created using additive manufacturing techniques. For example, a camera array and gas nozzle may be directed at a gas impingement point comprising one or more areas on a product being built layer-by-layer by additive manufacturing. As each layer is added, inspection may be accomplished using the methods and apparatuses described with respect to **Figure 3** through **Figure 10** by blowing cool gas on the layers as they are added and then using the camera array to look for inconsistencies on those layers, in-situ and in real time.

Thus, in this specific example, the illustrative embodiments are primarily focused on inspecting the surface of the additively formed part. The goal of the additively formed part is to create a part by adding material and create a within-tolerance surface finish which would not need secondary processing to bring within tolerance. A version of the illustrative embodiments could be used to inspect the applied layers, but could also inspect the just-created surface looking for out-of-tolerance inconsistencies on the surface. The size of the inspection area could be sized to the additive manufacturing surface size increase due to additive manufacturing process.

Further yet, the illustrative embodiments may be used to inspect devices created using subtractive manufacturing, such as milling. For example, a camera array and gas nozzle may be directed at a gas impingement point comprising one or more areas on a product being formed by milling or otherwise removing material from a workpiece to create a finish surface. As the tool moves across the surface removing material, the inspection device attached to the tool can use the method of the illustrative embodiments to inspect the finish of the just created surface. The size of the inspection area could be sized to the removal size of the subtractive manufacturing process. The, inspection may be accomplished using the methods and apparatuses described with respect to **Figure 3** through **Figure 10** by blowing cool gas on the layers or areas as they are removed, and then using the camera array to look for inconsistencies on those layers or areas, in-situ and in real time.

In still other illustrative embodiments, the methods and apparatuses described with respect to **Figure 3** through **Figure 10** may be used to inspect devices manufactured using a fitting machine or a manufactured using a machine that binds or seals objects together. The bindings, fittings, seals, or seams may be inspected by blowing cool gas on the layers or areas as they are removed, and then using the camera array to look for inconsistencies on those bindings, fittings, seals, or seams, in-situ and in real time. These illustrative embodiments are especially fitting when the process moves across whatever workpiece is being worked upon. The inspection device can be attached to the device performing the operation and inspection can be performed as during the relevant manufacturing process.

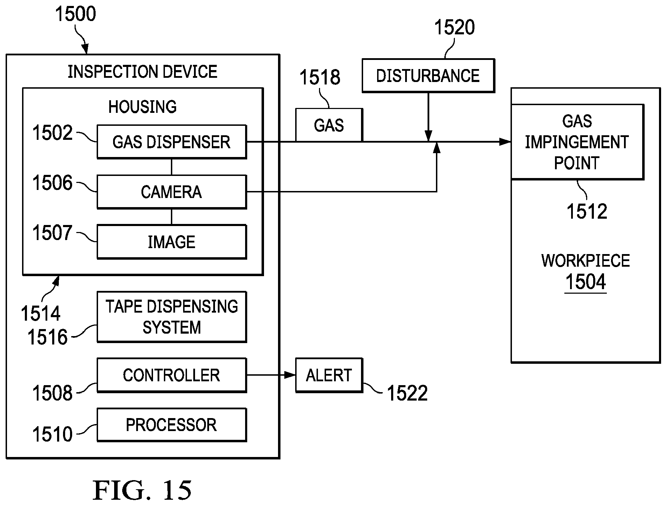

Thus, the illustrative embodiments described herein are not necessarily limited to composite tape laying processes, such as those described with respect to **Figure 3** through **Figure 10****.** Still other applications are contemplated and not necessarily excluded by the examples provided above. **Figure 15** is an illustration of an inspection device, in accordance with an illustrative embodiment. In inspection device **1500** is a variation of the inspection devices described with respect to **Figure 3** through **Figure 14C****.**

Inspection device **1500** includes gas dispenser **1502** aimed at workpiece **1504.** Inspection device **1500** also includes camera **1506** aimed at a gas impingement point on the workpiece.

Inspection device **1500** may also include controller **1508** controlling all of dispensing of a gas from gas dispenser **1502,** camera **1506** to capture images, such as image **1507,** and processor **1510** configured to process the images of gas impingement point **1512.**

Inspection device **1500** may also include housing **1514** containing both the gas dispenser and the camera. Inspection device **1500** may also include tape dispensing system **1516** connected to housing **1514,** the tape dispensing system configured to lay tape on the workpiece.

In another illustrative embodiment, gas dispenser **1502** is configured to emit a laminar gas flow. Gas **1518** may be air. Gas **1518** may be any other suitable gasses, as described above. The gas may be at a cold temperature, meaning less than a temperature of the workpiece. In another illustrative embodiment, camera **1506** is an infrared camera and the images comprise infrared images.

In another illustrative embodiment, controller **1508** may be configured to control gas dispenser **1502** to dispense gas **1518** onto gas impingement point **1512.** In this case, controller **1508** may receive image **1507** from camera **1506** of gas impingement point **1512** while gas **1518** flows onto gas impingement point **1512.** Controller **1508,** using processor **1510,** may then analyze image **1507** to determine whether disturbance **1520** in the flow of gas **1518** occurs. Controller **1508** may then, responsive to identifying disturbance **1520,** transmit alert **1522.**

The illustrative embodiments may be further varied. For example, the illustrative embodiments contemplate fabricating a portion of an aircraft using inspection device **1500.** Thus, the illustrative embodiments are not necessarily limited by the example of **Figure 15****.** For a paint or coating inspection system, the tape dispenser could be replaced by a paint or coating applier, or an additive manufacturing material adding device, or a subtractive manufacturing tool, or the sealer, etc. The inspection device is attached to the tool performing the operation so that an inspection in-situ and in real time can occur.

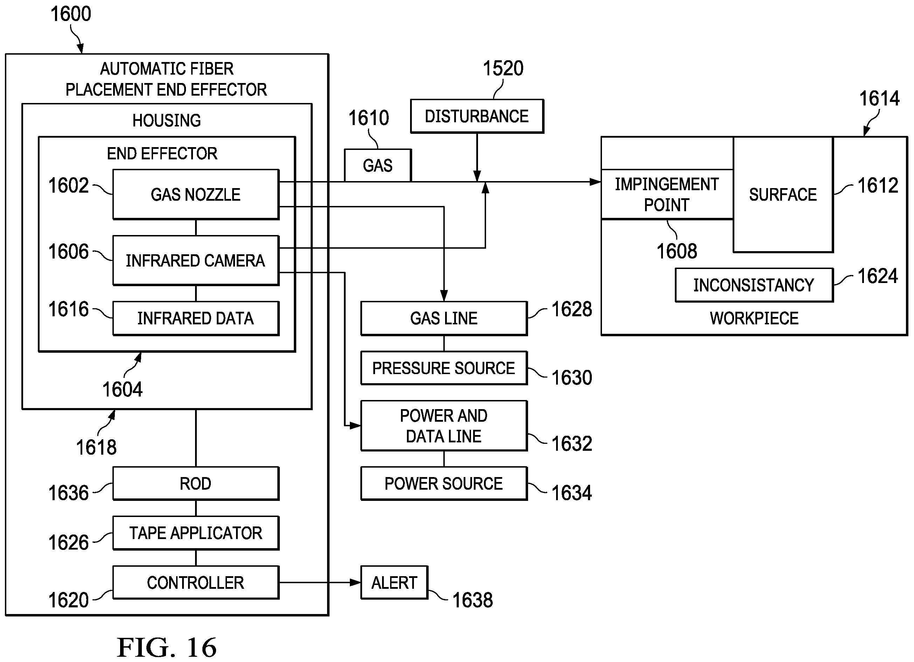

**Figure 16** illustrates an automatic fiber placement end effector, in accordance with an illustrative embodiment. Automatic fiber placement end effector **1600** includes gas nozzle **1602** connected to end effector **1604.** Automatic fiber placement end effector **1600** also includes infrared camera **1606** directed at impingement point **1608** where gas **1610** from gas nozzle **1602** impinges on surface **1612** of workpiece **1614.** Gas nozzle **1602** and infrared camera **1606** are pointed such that both gas **1610** is directable at workpiece **1614** and infrared data **1616** can be taken from workpiece **1614.**

Automatic fiber placement end effector **1600** may be varied. For example, automatic fiber placement end effector **1600** may also include housing **1618** which end effector **1604** is connected. In another example, automatic fiber placement end effector **1600** may also include controller **1620** configured to retrieve infrared data **1616** from infrared camera **1606** and determine, based on infrared data **1616,** whether inconsistency **1622** is present on workpiece **1614.**

In an illustrative embodiment, controller **1620** may be further configured to control a direction, a pressure, and gas application during a tape laying sequence, and to control a temperature of gas **1610.** In another illustrative embodiment, controller **1620** may be further configured to control a direction and a time of imaging of infrared camera **1606.**

In still another illustrative embodiment, end effector **1604** holds both infrared camera **1606** and gas nozzle **1602.** Gas **1610** may be air. Gas **1518** may be other gasses, as described above.

In yet another illustrative embodiment, automatic fiber placement end effector **1600** may also include tape applicator **1626** connected to housing **1618.**

In a different illustrative embodiment, automatic fiber placement end effector **1600** may also include gas line **1628** connected to gas nozzle **1602.** Automatic fiber placement end effector **1600** may also include pressure source **1630** connected to gas line **1628.** Pressure source **1630** may be configured to pump gas **1610,** gas **1610** being less than -17.78 °C (zero degrees Fahrenheit) into gas line **1628.**

Furthering this illustrative embodiment, automatic fiber placement end effector **1600** may also include power and data line **1632** connected to infrared camera **1606.** Automatic fiber placement end effector **1600** may also include power source **1634** connected to power and data line **1632.** Automatic fiber placement end effector **1600** may also include controller **1620** connected to power and data line **1632.** Controller **1620** may be configured to control operation of infrared camera **1606.**

Furthering this example, controller **1620** may be further configured to use infrared data **1616** to confirm that gas nozzle **1602** dispenses a laminar flow of gas. Additionally, automatic fiber placement end effector **1600** may also include gas line **1628** connected to gas nozzle **1602.** Automatic fiber placement end effector **1600** may also include pressure source **1630** connected to gas line **1628.** Pressure source **1630** may be configured to pump gas **1610** into gas line **1628.** Controller **1620** may be further configured to control operation of pressure source **1630.** In another illustrative embodiment, gas nozzle **1602** and infrared camera **1606** are one of: pointed in a same direction and pointed in different directions.

In a still different illustrative embodiment, automatic fiber placement end effector **1600** may also include tape applicator **1626** connected to housing **1618.** Housing **1618** may be a pair of L-brackets. Tape applicator **1626** may be connected to the L-brackets via a rod **1636.** Rod **1636** may be rotatable pin **472** or rotatable pin **474** of **Figure 4****.**

Controller may be configured to issue alert **1638** if inconsistency **1624** is detected. Alert **1638** may take the form of an audio or visual alert, or may take the form of an electronic message displayed on a display screen. Alert **1638** may also be stored data which instructs either a computer process or a human user that inconsistency **1624** might bear further scrutiny.

Still other illustrative embodiments are contemplated. For example, the illustrative embodiments contemplate fabricating a portion of an aircraft using automatic fiber placement and automatic fiber placement end effector **1600.** Thus, the illustrative embodiments are not necessarily limited to the examples shown in **Figure 16****.**

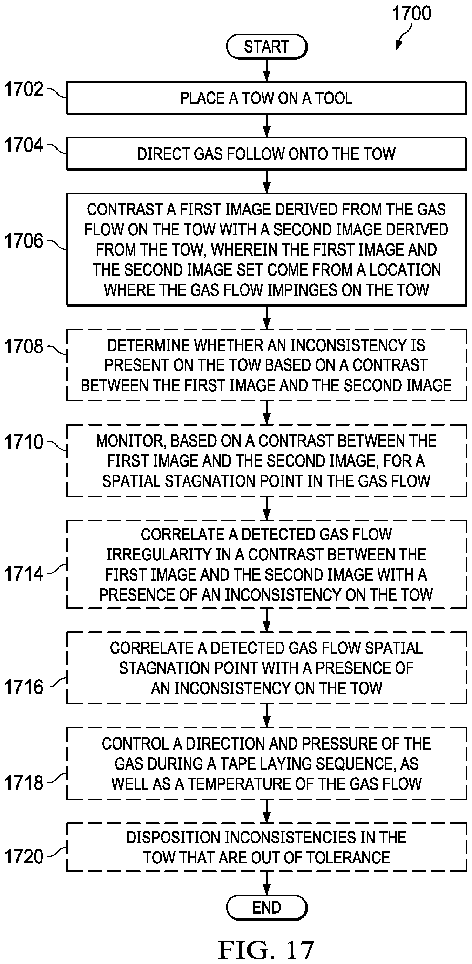

**Figure 17** is an illustration of a method of inspecting a structure, in accordance with an illustrative embodiment. Method **1700** is a variation of the methods described above with respect to **Figure 3** through **Figure 16****.** Optional operations of method **1700** are shown with dashed boxes.

Method **1700** includes placing a tow on a tool (operation **1702**). Method **1700** also includes directing a gas flow onto the tow (operation **1704**). Method **1700** also includes contrasting a first image derived from the gas flow on the tow with a second image derived from the tow, wherein the first image and the second image set come from a location where the gas flow impinges on the tow (operation **1706**).

Method **1700** may be varied. For example, method **1700** also may include determining whether an inconsistency is present on the tow based on a contrast between the first image and the second image (operation **1708**). In another example, method **1700** also may include monitoring, based on a contrast between the first image and the second image, for a spatial stagnation point in the gas flow (operation **1710**). In an illustrative embodiment, the gas flow is chilled to -17.78 °C (zero degrees Fahrenheit) or less, and the first image comprises an infrared image.

In yet another illustrative embodiment, method **1700** also may include correlating a detected gas flow irregularity in a contrast between the first image and the second image with a presence of an inconsistency on the tow (operation **1712**). In still another illustrative embodiment, method **1700** also may include correlating a detected gas flow spatial stagnation point with a presence of an inconsistency on the tow.

In yet another illustrative embodiment, method **1700** also may include controlling a direction and pressure of the gas during a tape laying sequence, as well as a temperature of the gas flow (operation **1718**). Method **1700** also may include continuing monitoring for a lag time to allow inspection at an end of a tape application run. Method **1700** also may include dispositioning inconsistencies in the tow that are out of tolerance (operation **1720**). In one illustrative embodiment, the method may terminate thereafter.

Still other variations are possible. For example, the illustrative embodiments also contemplate a portion of an aircraft assembled according to the method **1700.** Thus, the illustrative embodiments are not necessarily limited to the example provided in method **1700.**

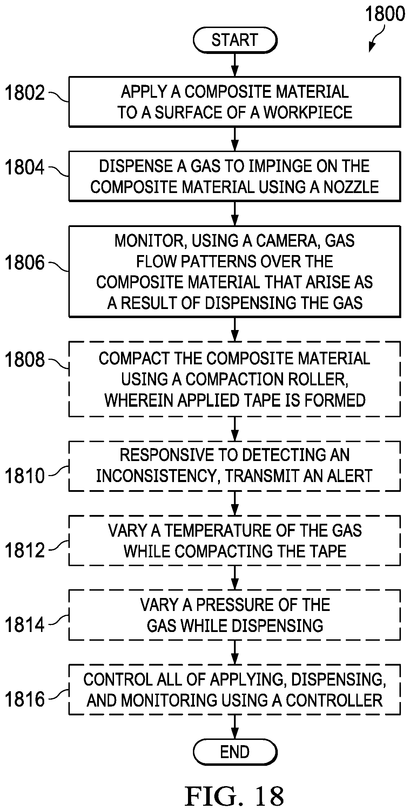

**Figure 18** is an illustration of a method of fabricating a composite structure, in accordance with an illustrative embodiment. Method **1800** is a variation of the methods and techniques described above with respect to **Figure 3** through **Figure 17****.** Operations that are optional with respect to method **1800** are shown with dotted boxes.

Method **1800** also includes applying a composite material to a surface of a workpiece (operation **1802**). Method **1800** also includes dispensing a gas to impinge on the composite material using a nozzle (operation **1804**). Method **1800** also includes monitoring, using a camera, gas flow patterns over the composite material that arise as a result of dispensing the gas (operation **1806**).

Method **1800** may be varied. For example, method **1800** also may include compacting the composite material using a compaction roller, wherein applied tape is formed (operation **1808**). Compacting may be performed upstream from a gas impingement point on the composite material.

The gas may be a cool laminar flow, wherein cool is defined as less than a temperature of the composite material. The camera is an infrared camera. Monitoring may include checking for changes to stagnation point patterns, wherein the changes arise as a result of an inconsistency in the composite material.

Method **1800** also may include, responsive to detecting an inconsistency, transmitting an alert (operation **1810**). Method **1800** also may include varying a temperature of the gas while compacting the tape (operation **1812**). Method **1800** also may include varying a pressure of the gas while dispensing (operation **1814**). Method **1800** also may include controlling all of applying, dispensing, and monitoring using a controller (operation **1816**). In one illustrative embodiment, the method may terminate thereafter.

Still other variations are possible. For example, the illustrative embodiments contemplate a portion of an aircraft assembled according to method **1800.** Thus, the illustrative embodiments are not necessarily limited to the example provided in method **1800.**

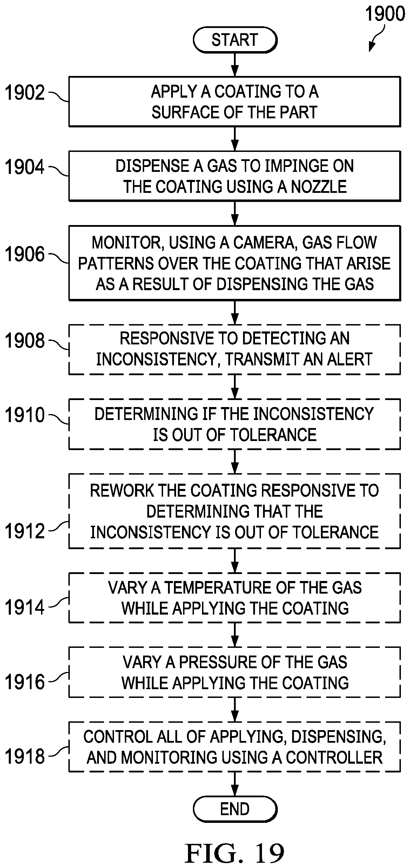

**Figure 19** is an illustration of a method of fabricating a part having a coating applied to a surface of the part, in accordance with an illustrative embodiment. Method **1900** is a variation of the methods and techniques described with respect to **Figure 3** through **Figure 18****.** Operations that are optional with respect to method **1900** are shown with dotted boxes.

Method **1900** includes applying a coating to a surface of the part (operation **1902**). Method **1900** also includes, after applying, dispensing a gas to impinge on the coating using a nozzle (operation **1905**). Method **1900** also includes monitoring, using a camera, gas flow patterns over the coating that arise as a result of dispensing the gas (operation **1906**).

Method **1900** may be varied. For example, in an illustrative embodiment, the coating may be paint. In another illustrative embodiment, the gas is a cool laminar flow, wherein cool is defined as less than a temperature of the coating. The camera may be an infrared camera. Monitoring may include checking for changes to stagnation point patterns, wherein the changes arise as a result of an inconsistency in the coating.

Still other variations are possible. For example, method **1900** also may include, responsive to detecting an inconsistency, transmitting an alert (operation **1908**). In this case, method **1900** also may include determining if the inconsistency is out of tolerance (operation **1910**). Method **1900** also may include reworking the coating responsive to determining that the inconsistency is out of tolerance (operation **1912**).

Still other variations are possible. For example, method **1900** also may include varying a temperature of the gas while applying the coating (operation **1914**). Method **1900** also may include varying a pressure of the gas while applying the coating (operation **1916**). Method **1900** also may include controlling all of applying, dispensing, and monitoring using a controller (operation **1918**). In one illustrative embodiment, the method may terminate thereafter.

Yet other illustrative embodiments are contemplated. For example, the illustrative embodiments also contemplate a portion of an aircraft assembled according to method **1900.** Thus, the illustrative embodiments are not necessarily limited by the examples provided with respect to method **1900.**

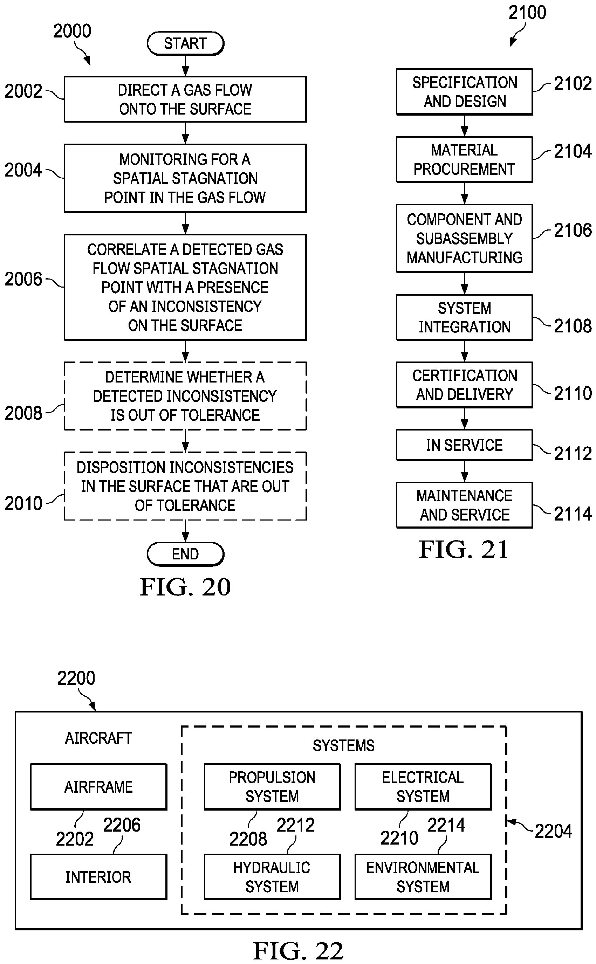

**Figure 20** is an illustration of a method of inspecting a surface, in accordance with an illustrative embodiment. Method **2000** is a variation of the methods and techniques described with respect to **Figure 3** through **Figure 19****.** Operations that are optional in method **2000** are shown in dotted boxes.

Method **2000** includes directing a gas flow onto the surface (operation **2002**). Method **2000** also includes monitoring for a spatial stagnation point in the gas flow (operation **2004**). Method **2000** also includes correlating a detected gas flow spatial stagnation point with a presence of an inconsistency on the surface (operation **2006**).

Method **2000** may be varied. For example, directing, monitoring, and correlating may be performed automatically. In another example, method **2000** may also include determining whether a detected inconsistency is out of tolerance (operation **2008**). Additionally, method **2000** also may include dispositioning inconsistencies in the surface that are out of tolerance (operation **2010**). In an illustrative embodiment, the gas flow comprises a cool gas, wherein cool is defined as a first temperature less than a second temperature of the surface. Cool also may be defined as being 0°C or less (32 degrees Fahrenheit or less) . In another illustrative embodiment, monitoring for the spatial stagnation point may include using an infrared camera to monitor temperature distributions in the gas flow. In one illustrative embodiment, the method may terminate thereafter.

Still other variations are possible. For example, the illustrative embodiments also contemplate a portion of an aircraft assembled according to method **2000.** Thus, the illustrative embodiments are not necessarily limited to the examples shown with respect to method **2000.**

Illustrative embodiments of the disclosure may be described in the context of aircraft manufacturing and service method **2100** as shown in **Figure 21** and aircraft **2200** as shown in **Figure 22****.** Aircraft **2200** may be aircraft **100** of **Figure 1****.** The techniques described herein may be used to manufacture aircraft **2200** using aircraft manufacturing and service method **2100.** The techniques described with respect to **Figure 21** and **Figure 22** may take advantage of the inspections systems, devices, and methods described with respect to **Figure 1** through **Figure 20****.**

Turning first to **Figure 21****,** an illustration of an aircraft manufacturing and service method is depicted in accordance with an illustrative embodiment. During pre-production, aircraft manufacturing and service method **2100** may include specification and design **2102** of aircraft **2200** in **Figure 22** and material procurement **2104.**

During production, component and subassembly manufacturing **2106** and system integration **2108** of aircraft **2200** in **Figure 22** takes place. Thereafter, aircraft **2200** in **Figure 22** may go through certification and delivery **2110** in order to be placed in service **2112.** While in service **2112** by a customer, aircraft **2200** in **Figure 22** is scheduled for routine maintenance and service **2114,** which may include modification, reconfiguration, refurbishment, and other maintenance or service.

The inspection techniques described with respect to **Figure 2** through **Figure 20** may be applied with respect to service method **2100** and aircraft **2200.** For example, the illustrative embodiments described above may be applied, for example, on at least manufacturing **2106,** system integration **2108,** service **2114,** to build airframe **2202** and interior **2206.**

Each of the processes of aircraft manufacturing and service method **2100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 22****,** an illustration of an aircraft is depicted in which an illustrative embodiment may be implemented. In this example, aircraft **2200** is produced by aircraft manufacturing and service method **2100** in **Figure 21** and may include airframe **2202** with plurality of systems **2204** and interior **2206.** Examples of systems **2204** include one or more of propulsion system **2208,** electrical system **2210,** hydraulic system **2212,** and environmental system **2214.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **2100** in **Figure 21****.**

In one illustrative example, components or subassemblies produced in component and subassembly manufacturing **2106** in **Figure 21** may be fabricated or manufactured in a manner similar to components or subassemblies produced while aircraft **2200** is in service **2112** in **Figure 21****.** As yet another example, one or more apparatus embodiments, method embodiments, or a combination thereof may be utilized during production stages, such as component and subassembly manufacturing **2106** and system integration **2108** in **Figure 21****.** One or more apparatus embodiments, method embodiments, or a combination thereof may be utilized while aircraft **2200** is in service **2112** and/or during maintenance and service **2114** in **Figure 21****.** The use of a number of the different illustrative embodiments may substantially expedite the assembly of and/or reduce the cost of aircraft **2200.**

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An inspection device (1500) comprising:
a gas dispenser (1502) aimed at a workpiece (1504, 1614); and
a camera (1506) aimed at a gas impingement point (1512) on the workpiece (1504, 1614),
further comprising:
a housing (1514, 1618) containing both the gas dispenser (1502) and the camera (1506) and
a tape dispensing system (1516) connected to the housing (1514, 1618), the tape dispensing system (1516) configured to lay tape on the workpiece (1504, 1614).

2. The inspection device (1500) of claim 1, further comprising:
a controller (1508, 1620) controlling all of:
dispensing of gas (1518, 1610) from the gas dispenser (1502);
controlling the camera (1506) to capture images; and
a processor (1510) configured to process the images of the gas impingement point (1512).

3. The inspection device (1500) of any of claims 1or 2, wherein the gas dispenser (1502) is configured to emit a laminar gas flow, preferably wherein the gas (1518, 1610) is air.

4. The inspection device (1500) of any of claims 1-3,
wherein the camera (1506) comprises an infrared camera (1606) and the images comprise infrared images,
and/or
further comprising:
a controller (1508), the controller (1508) configured to:
control the gas dispenser (1502) to dispense the gas (1518) onto the gas impingement point (1512);
receive an image (1507) from the camera (1506) of the gas impingement point (1512) while the gas (1518) flows onto the gas impingement point (1512);
analyze the image (1507) to determine whether a disturbance (1520) in a flow of gas (1518, 1610) occurs; and
responsive to identifying the disturbance (1520), to transmit an alert (1522, 1638).

5. An automatic fiber placement end effector (1600), comprising:
a gas nozzle (1602) connected to an end effector (1604);
an infrared camera (1606) directed at an impingement point (1608) where a gas (1518, 1610) from the gas nozzle (1602) impinges on a surface (1612) of a workpiece (1614), the gas nozzle (1602) and the infrared camera (1606) pointed such that both the gas (1518, 1610) is directable at the workpiece (1504, 1614) and infrared data (1616) can be taken from the workpiece (1504, 1614).

6. The automatic fiber placement end effector (1600) of claim 5, further comprising
a controller (1508, 1620), configured to retrieve infrared data (1616) from the infrared camera (1606) and determine, based on the infrared data (1616), whether an inconsistency is present on the workpiece (1504, 1614); preferably wherein the controller (1508, 1620) is further configured to control a direction, a pressure, and gas application during a tape laying sequence, and to control a temperature of the gas (1518, 1610) and/or wherein the controller (1508, 1620) is further configured to control a direction and a time of imaging of the infrared camera (1606).

7. The automatic fiber placement end effector (1600) of any of claims 5 or 6, further comprising one or more of the following:
wherein an effector frame holds both the infrared camera (1606) and the gas nozzle (1602);
wherein the gas (1518, 1610) comprises air;
a tape applicator (1626) connected to a housing (1514, 1618);
a gas line (1628) connected to the gas nozzle (1602) and a pressure source (1630) connected to the gas line (1628), the pressure source (1630) configured to pump the gas (1518, 1610), the gas (1518, 1610) being less than - 17.78 °C (zero degrees Fahrenheit) , into the gas line (1628).

8. The automatic fiber placement end effector (1600) of claim 7, further comprising:
a power and data line (1632) connected to the infrared camera (1606);
a power source (1634) connected to the power and data line (1632); and
a controller (1508, 1620) connected to the power and data line (1632), the controller (1508, 1620) configured to control operation of the infrared camera (1606).

9. A method (1700) of inspecting a structure, the method (1700) comprising:
placing a tow on a tool (1702);
directing a gas flow onto the tow (1704); and
contrasting a first image derived from a gas flow on the tow with a second image derived from the tow, wherein the first image and the second image set come from a location where the gas flow impinges on the tow (1706).

10. The method (1700) of claim 9, further comprising one or more of the following:
determining whether an inconsistency is present on the tow based on a contrast between the first image and the second image (1708);
monitoring, based on a contrast between the first image and the second image, for a spatial stagnation point in the gas flow (1710);
wherein the gas flow is chilled to -17.78 °C (zero degrees Fahrenheit) or less, and wherein the first image comprises an infrared image;.
correlating a detected gas flow irregularity in a contrast between the first image and the second image with a presence of an inconsistency on the tow (1714).

11. A method of fabricating a composite structure, the method comprising:
applying a composite material to a surface of a workpiece (1504, 1614);
dispensing a gas to impinge on the composite material using a nozzle;
monitoring, using a camera (1506), gas flow patterns over the composite material that arise as a result of dispensing the gas (1518, 1610).

12. The method of claim 11, further comprising:
compacting the composite material using a compaction roller, wherein applied tape is formed, preferably wherein compacting is performed upstream from a gas impingement point (1512) on the composite material.

13. A method of fabricating a part having a coating applied to a surface (1612) of the part, the method comprising:
applying a coating to a surface (1612) of the part;
after applying, dispensing a gas to impinge on the coating using a nozzle;
monitoring, using a camera (1506), gas flow patterns over the coating that arise as a result of dispensing the gas.

14. The method of claim 13 with one or more of the following:
wherein the coating comprises paint;
wherein the gas (1518, 1610) is a cool laminar flow, wherein cool is defined as less than a temperature of the coating; (1506) is an infrared camera (1606);
wherein monitoring comprises checking for changes to stagnation point patterns, wherein the changes arise as a result of an inconsistency (1624) in the coating.

15. A method of inspecting a surface (1612) with a device according to any of the claims 1-4, the method comprising:
directing a gas flow onto the surface (1612);
monitoring for a spatial stagnation point in the gas flow; and
correlating a detected gas flow spatial stagnation point with a presence of an inconsistency (1624) on the surface (1612).

## Patentansprüche

1. Inspektionsvorrichtung (1500), die Folgendes umfasst:
eine Gasabgabevorrichtung (1502), die auf ein Werkstück (1504, 1614) gerichtet ist; und
eine Kamera (1506), die auf einen Gasauftreffpunkt (1512) auf dem Werkstück (1504, 1614) gerichtet ist,
ferner umfassend:
ein Gehäuse (1514, 1618), das sowohl die Gasabgabevorrichtung (1502) als auch die Kamera (1506) enthält, und
ein Bandabgabesystem (1516), das mit dem Gehäuse (1514, 1618) verbunden ist, wobei das Bandabgabesystem (1516) so konfiguriert ist, dass es Band auf das Werkstück (1504, 1614) legt.

2. Inspektionsvorrichtung (1500) nach Anspruch 1, die ferner Folgendes umfasst:
eine Steuerung (1508, 1620), die alles Folgende steuert:
Abgeben von Gas (1518, 1610) aus der Gasabgabevorrichtung (1502);
Steuern der Kamera (1506), um Bilder aufzunehmen; und
einen Prozessor (1510), der zum Verarbeiten der Bilder des Gasauftreffpunktes (1512) konfiguriert ist.

3. Inspektionsvorrichtung (1500) nach einem der Ansprüche 1 und 2, wobei die Gasabgabevorrichtung (1502) so konfiguriert ist, dass sie einen laminaren Gasstrom abgibt, wobei es sich bei dem Gas (1518, 1610) vorzugsweise um Luft handelt.

4. Inspektionsvorrichtung (1500) nach einem der Ansprüche 1 bis 3,
wobei die Kamera (1506) eine Infrarotkamera (1606) umfasst und die Bilder Infrarotbilder umfassen,
und/oder
ferner umfassend:
eine Steuerung (1508), wobei die Steuerung (1508) zu Folgendem konfiguriert ist:
Steuern der Gasabgabevorrichtung (1502), um das Gas (1518) auf den Gasauftreffpunkt (1512) abzugeben;
Empfangen eines von der Kamera (1506) stammenden Bildes (1507) des Gasauftreffpunktes (1512), während das Gas (1518) auf den Gasauftreffpunkt (1512) strömt;
Analysieren des Bildes (1507), um zu bestimmen, ob eine Störung (1520) in einem Gasstrom (1518, 1610) auftritt; und
als Reaktion auf das Identifizieren der Störung (1520), Übertragen einer Warnung (1522, 1638).

5. Automatischer Faserplatzierungsendeffektor (1600), der Folgendes umfasst:
eine Gasdüse (1602), die mit einem Endeffektor (1604) verbunden ist;
eine Infrarotkamera (1606), die auf einen Auftreffpunkt (1608) ausgerichtet ist, an dem ein Gas (1518, 1610) aus der Gasdüse (1602) auf eine Oberfläche (1612) eines Werkstücks (1614) auftrifft, wobei die Gasdüse (1602) und die Infrarotkamera (1606) so zeigen, dass sowohl das Gas (1518, 1610) auf das Werkstück (1504, 1614) ausgerichtet werden kann, als auch Infrarotdaten (1616) von dem Werkstück (1504, 1614) aufgenommen werden können.

6. Automatischer Faserplatzierungsendeffektor (1600) nach Anspruch 5, der ferner Folgendes umfasst:
eine Steuerung (1508, 1620), die konfiguriert ist, um Infrarotdaten (1616) von der Infrarotkamera (1606) abzurufen und um basierend auf den Infrarotdaten (1616) zu bestimmen, ob eine Inkonsistenz auf dem Werkstück (1504, 1614) vorhanden ist; wobei die Steuerung (1508, 1620) vorzugsweise ferner konfiguriert ist zum Steuern einer Richtung, eines Drucks und einer Gasanwendung während einer Bandlegesequenz sowie zum Steuern einer Temperatur des Gases (1518, 1610), und/oder wobei die Steuerung (1508, 1620) ferner konfiguriert ist, um eine Richtung und eine Zeit der Bildaufnahme der Infrarotkamera (1606) zu steuern.

7. Automatischer Faserplatzierungsendeffektor (1600) nach einem der Ansprüche 5 und 6, der ferner mindestens eines der Folgenden umfasst:
wobei ein Effektorrahmen sowohl die Infrarotkamera (1606) als auch die Gasdüse (1602) hält;
wobei das Gas (1518, 1610) Luft umfasst;
einen Bandapplikator (1626), der mit einem Gehäuse (1514, 1618) verbunden ist;
eine mit der Gasdüse (1602) verbundene Gasleitung (1628) und eine mit der Gasleitung (1628) verbundene Druckquelle (1630), wobei die Druckquelle (1630) so konfiguriert ist, dass sie das Gas (1518, 1610) in die Gasleitung (1628) pumpt, wobei das Gas (1518, 1610) eine Temperatur von weniger als -17,78 °C (Null Grad Fahrenheit) aufweist.

8. Automatischer Faserplatzierungsendeffektor (1600) nach Anspruch 7, der ferner Folgendes umfasst:
eine Strom- und Datenleitung (1632), die mit der Infrarotkamera (1606) verbunden ist;
eine Stromquelle (1634), die mit der Strom- und Datenleitung (1632) verbunden ist; und
eine Steuerung (1508, 1620), die mit der Strom- und Datenleitung (1632) verbunden ist, wobei die Steuerung (1508, 1620) so konfiguriert ist, dass sie den Betrieb der Infrarotkamera (1606) steuert.

9. Verfahren (1700) zum Inspizieren einer Struktur, wobei das Verfahren (1700) Folgendes umfasst:
Platzieren eines Wergs auf einem Werkzeug (1702);
Ausichten eines Gasstroms auf das Werg (1704); und
Kontrastieren eines ersten Bildes, das von einem Gasstrom auf dem Werg abgeleitet wird, mit einem zweiten Bild, das von dem Werg abgeleitet wird, wobei das erste Bild und das zweite Bild von einer Stelle kommen, an der der Gasstrom auf das Werg (1706) auftrifft.

10. Verfahren (1700) nach Anspruch 9, das ferner mindestens eines der Folgenden umfasst:
Bestimmen, ob eine Inkonsistenz auf dem Werg vorhanden ist, und zwar basierend auf einem Kontrast zwischen dem ersten Bild und dem zweiten Bild (1708);
basierend auf einem Kontrast zwischen dem ersten Bild und dem zweiten Bild Überwachen auf einen räumlichen Staupunkt in dem Gasstrom (1710);
wobei der Gasstrom auf eine Temperatur von -17,78 °C (Null Grad Fahrenheit) oder weniger gekühlt wird, und wobei das erste Bild ein Infrarotbild umfasst;
Korrelieren einer erfassten Gasstromunregelmäßigkeit in einem Kontrast zwischen dem ersten Bild und dem zweiten Bild mit dem Vorhandensein einer Inkonsistenz auf dem Werg (1714).

11. Verfahren zum Herstellen einer Verbundstruktur, wobei das Verfahren Folgendes umfasst:
Aufbringen eines Verbundmaterials auf eine Oberfläche eines Werkstücks (1504, 1614);
Abgeben eines Gases zum Auftreffen auf das Verbundmaterial unter Verwendung einer Düse;
unter Verwendung einer Kamera (1506) Überwachen von Gasstrommustern über dem Verbundmaterial, die als Ergebnis der Abgabe des Gases (1518, 1610) entstehen.

12. Verfahren nach Anspruch 11, das ferner Folgendes umfasst:
Verdichten des Verbundmaterials unter Verwendung einer Verdichtungswalze, wobei aufgebrachtes Band geformt wird, wobei das Verdichten vorzugsweise stromaufwärts von einem Gasauftreffpunkt (1512) auf dem Verbundmaterial durchgeführt wird.

13. Verfahren zum Herstellen eines Teils mit einer auf eine Oberfläche (1612) des Teils aufgebrachten Beschichtung, wobei das Verfahren Folgendes umfasst:
Aufbringen einer Beschichtung auf eine Oberfläche (1612) des Teils;
nach dem Aufbringen Abgeben eines Gases zum Auftreffen auf die Beschichtung unter Verwendung einer Düse;
unter Verwendung einer Kamera (1506) Überwachen von Gasstrommustern über der Beschichtung, die als Ergebnis der Abgabe des Gases entstehen.

14. Vorrichtung nach Anspruch 13, wobei eine oder mehrere der folgenden Aussagen zutreffen:
die Beschichtung umfasst Farbe;
bei dem Gas (1518, 1610) handelt es sich um eine kühle laminare Strömung, wobei kühl als weniger als eine Temperatur der Beschichtung definiert ist; (1506) ist eine Infrarotkamera (1606);
das Überwachen umfasst das Prüfen auf Änderungen an Stagnationspunktmustern, wobei die Änderungen als Ergebnis einer Inkonsistenz (1624) in der Beschichtung entstehen.

15. Verfahren zum Inspizieren einer Oberfläche (1612) mit einer Vorrichtung nach einem der Ansprüche 1 bis 4, wobei das Verfahren Folgendes umfasst:
Ausrichten eines Gasstroms auf die Oberfläche (1612);
Überwachen auf einen räumlichen Stagnationspunkt in dem Gasstrom; und
Korrelieren eines erfassten räumlichen Stagnationspunkts des Gasstroms mit dem Vorhandensein einer Inkonsistenz (1624) auf der Oberfläche (1612).

## Revendications

1. Dispositif d'inspection (1500) comprenant :
un distributeur de gaz (1502) dirigé vers une pièce d'ouvrage (1504, 1614), et
une caméra (1506) dirigée vers un point d'impact du gaz (1512) sur la pièce d'ouvrage (1504, 1614) ;
comprenant en outre :
un boîtier (1514, 1618) contenant le distributeur de gaz (1502) ainsi que la caméra (1506), et
un système distributeur de bande (1516) raccordé au boîtier (1514, 1618), le système distributeur de bande (1516) étant conçu pour poser une bande sur la pièce d'ouvrage (1504, 1614).

2. Dispositif d'inspection (1500) selon la revendication 1, comprenant en outre :
un organe de commande (1508, 1620) effectuant la commande de :
la distribution du gaz (1518, 1610) par le distributeur de gaz (1502), et de
la commande de la caméra (1506) afin qu'elle prenne des images ; et
un processeur (1510) conçu pour traiter les images du point d'impact du gaz (1512).

3. Dispositif d'inspection (1500) selon l'une quelconque des revendications 1 et 2, dans lequel le distributeur de gaz (1502) est conçu pour émettre un flux de gaz laminaire, le gaz (1518, 1610) étant de préférence de l'air.

4. Dispositif d'inspection (1500) selon l'une quelconque des revendications 1 à 3,
dans lequel la caméra (1506) comprend une caméra infrarouge (1606) et les images comprennent des images infrarouges,
et/ou
comprenant en outre :
un organe de commande (1508), l'organe de commande (1508) étant conçu pour :
commander le distributeur de gaz (1502) afin qu'il distribue le gaz (1518) sur le point d'impact du gaz (1512),
recevoir une image (1507), en provenance de la caméra (1506), du point d'impact du gaz (1512) tandis que le gaz (1518) s'écoule en direction du point d'impact du gaz (1512),
analyser l'image (1507) afin de déterminer la survenue d'une perturbation (1520) dans le flux de gaz (1518, 1610), et
à la suite de l'identification d'une perturbation (1520), transmettre une alerte (1522, 1638).

5. Effecteur terminal de mise en place automatique de fibres (1600), comprenant :
une buse à gaz (1602) raccordée à un effecteur terminal (1604) ;
une caméra infrarouge (1606) orientée vers un point d'impact (1608) où un gaz (1518, 1610) provenant de la buse à gaz (1602) frappe une surface (1612) d'une pièce d'ouvrage (1614) ; la buse à gaz (1602) et la caméra infrarouge (1606) étant dirigées de telle manière que le gaz (1518, 1610) puisse être orienté vers la pièce d'ouvrage (1504, 1614) et que des données infrarouges (1616) puissent être obtenues à partir de la pièce d'ouvrage (1504, 1614).

6. Effecteur terminal de mise en place automatique de fibres (1600) selon la revendication 5, comprenant en outre :
un organe de commande (1508, 1620) conçu pour récupérer des données infrarouges (1616) provenant de la caméra infrarouge (1606) et déterminer, compte tenu des données infrarouges (1616), si un défaut est présent sur la pièce d'ouvrage (1504, 1614) ; ledit organe de commande (1508, 1620) étant de préférence conçu en outre pour commander la direction, la pression et l'application du gaz pendant la séquence de pose de la bande, et pour commander la température du gaz (1518, 1610) et/ou ledit organe de commande (1508, 1620) étant conçu en outre pour commander la direction et le temps de prise de vues de la caméra infrarouge (1606).

7. Effecteur terminal de mise en place automatique de fibres (1600) selon l'une quelconque des revendications 5 et 6, dans lequel, en outre :
un bâti d'effecteur supporte la caméra infrarouge (1606) ainsi que la buse à gaz (1602) ;
le gaz (1518, 1610) comprend de l'air ;
un applicateur de bande (1626) est raccordé à un boîtier (1514, 1618), et/ou une conduite de gaz (1628) est raccordée à la buse à gaz (1602) et une source de pression (1630) raccordée à la conduite de gaz (1628), la source de pression (1630) étant conçue pour pomper le gaz (1518, 1610), lequel gaz (1518, 1610) est à moins de -17,78 °C (zéro degré Fahrenheit), dans la conduite de gaz (1628).

8. Effecteur terminal de mise en place automatique de fibres (1600) selon la revendication 7, comprenant en outre :
un câble d'alimentation et de données (1632) raccordé à la caméra infrarouge (1606) ;
une source d'alimentation (1634) raccordée au câble d'alimentation et de données (1632) ; et
un organe de commande (1508, 1620) raccordé au câble d'alimentation et de données (1632), l'organe de commande (1508, 1620) étant conçu pour commander le fonctionnement de la caméra infrarouge (1606).

9. Procédé (1700) d'inspection d'une structure, le procédé (1700) comprenant :
la mise en place d'une mèche sur un outil (1702) ;
l'orientation d'un flux de gaz sur la mèche (1704) ; et
la mise en contraste d'une première image dérivée d'un flux de gaz orienté sur la mèche et d'une deuxième image dérivée de la mèche, ladite première image et ladite deuxième image provenant d'un emplacement où le flux de gaz frappe la mèche (1706).

10. Procédé (1700) selon la revendication 9, comprenant en outre une ou plusieurs des opérations suivantes :
détermination du fait ou non qu'un défaut est présent sur la mèche compte tenu d'un contraste entre la première image et la deuxième image (1708),
recherche, compte tenu d'un contraste entre la première image et la deuxième image, d'un point d'arrêt spatial dans le flux de gaz (1710) ;
ledit flux de gaz étant refroidi à -17,78 °C (zéro degré Fahrenheit) ou moins, et ladite première image comprenant une image infrarouge ; et/ou
corrélation d'une irrégularité, détectée dans le flux de gaz dans un contraste entre la première image et la deuxième image, et la présence d'un défaut sur la mèche (1714).

11. Procédé de fabrication d'une structure composite, le procédé comprenant :
l'application d'un matériau composite sur une surface d'une pièce d'ouvrage (1504, 1614),
la distribution d'un gaz destiné à frapper le matériau composite au moyen d'une buse ;
le contrôle, au moyen d'une caméra (1506), de configurations de flux de gaz, résultant de la distribution du gaz (1518, 1610), sur le matériau composite.

12. Procédé selon la revendication 11, comprenant en outre :
le compactage du matériau composite au moyen d'un rouleau de compactage, une bande appliquée étant formée, le compactage étant de préférence réalisé en amont d'un point d'impact du gaz (1512) sur le matériau composite.

13. Procédé de fabrication d'une pièce présentant un revêtement appliqué sur une surface (1612) de la pièce, le procédé comprenant :
l'application d'un revêtement sur une surface (1612) de la pièce,
après l'application, la distribution d'un gaz, destiné à frapper le revêtement, au moyen d'une buse,
le contrôle, au moyen d'une caméra (1506), de configurations de flux de gaz, résultant de la distribution de gaz, sur le revêtement.

14. Procédé selon la revendication 13, dans lequel :
le revêtement comprend de la peinture ;
le gaz (1518, 1610) est un flux laminaire froid, la notion de froid se définissant comme une température inférieure au revêtement ; (1506) est une caméra infrarouge (1606), et/ou
le contrôle comprend la recherche de changements concernant des configurations de points d'arrêt, lesdits changements résultant d'un défaut (1624) dans le revêtement.

15. Procédé d'inspection d'une surface (1612) à l'aide d'un dispositif selon l'une quelconque des revendications 1 à 4, le procédé comprenant :
l'orientation d'un flux de gaz sur la surface (1612),
la recherche d'un point d'arrêt spatial dans le flux de gaz, et
la corrélation d'un point d'arrêt spatial de flux de gaz détecté à la présence d'un défaut (1624) sur la surface (1612).
